# EUROPEAN PATENT APPLICATION

(11) **EP 1 624 026 A1**
(43) Date of publication of application: **08.02.2006**
(21) Application number: 04733150.9
(22) Date of filing: 14.05.2004
(51) Int. Cl.: C08L 101/00, B32B 27/00

(54) **RESIN COMPOSITION, PACKAGING STRUCTURE AND METHOD OF REGENERATION THEREOF**

(30) Priority: 14.05.2003 JP 2003135466; 27.06.2003 JP 2003185212; 10.09.2003 JP 2003318364
(71) Applicant: TOYO SEIKAN KAISHA, LTD., Tokyo 100-8522 (JP)
(72) Inventor: YAMADA, Toshiki, c/o Toyo Seikan Group, Yokohama-shi, Kanagawa 240-0062 (JP); TAKENOUCHI, Ken, c/o Toyo Seikan Group, Yokohama-shi, Kanagawa 240-0062 (JP); KIKUCHI, Atsushi, c/o Toyo Seikan Group, Yokohama-shi, Kanagawa 240-0062 (JP)
(74) Representative: Clerc, Natalia
(86) International application number: PCT/JP2004/006880
(87) International publication number: WO 2004/101686

(57) **Abstract**

A resion composition in which a coloring component comprising a polymer and having a regular configuration as a coloring principle is contained in a matrix resin, and a temperature at which the coloring component is decolored is higher than a temperature at which the matrix resin is processed. A packaging structure in which, on at least a portion of the surface of the packaging structure, portions which are different in optical characteristics from the surface are periodically arranged by use of a fibrous structure.

## Description

### Technical Field

The present invention relates to a colored resin composition, a packaging structure, and a method for reproducing the packaging structure. More particularly, it relates to a resin composition which maintains coloration when used as a packaging structure but can easily be decolored by external stimulation during reproduction, a packaging structure, and a method for reproducing the packaging structure.

### Background Art

Plastics are suitable for mass production owing to easy molding. Moreover, since the plastics possess excellent physical properties such as transparency and impact resistance, they have been widely used as various kinds of packages such as bottle containers, cups, pouches, or packaging sheets.

These packages are packed with various drinks, seasonings, cosmetics, drugs and the like as contents. However, some of these contents change in quality or deteriorate by a light, and therefore, for the purpose of protecting such contents from the light, the packages are colored in some cases. Furthermore, in order to differentiate commercial products from other similar products by decorating the packages to impart beauties thereto, the packages may be colored sometimes for the addition of the beauties to the packages.

In general, the plastic packages are colored by mixing a coloring agent such as a pigment or a dye with a plastic which is a main material of the packages. When the coloring agent is mixed, the packages absorb a light having a specific wavelength to cause color appearance.

The wavelength of the light absorbed by a substance depends on a chemical structure of the substance, and therefore, in order to obtain a specific color, it is necessary to use a specific chemical substance.

Typical examples of the packages which are colored by mixing the coloring agents are as follows.

For example, there may be mentioned plastic containers colored green, blue, brown and the like by mixing various pigments or dyes with resins. According to such containers, it is inhibited that a light having a specific wavelength absorbed by coloring components penetrate into the containers, and in consequence, there is imparted thereto the protection of the contents that are apt to change in quality or to deteriorate owing to the light beam, i.e., a visible light barrier performance. In addition, the containers colored with a specific color can create a product image and can be differentiated from other products, so that it is possible for consumers to enhance buying inclination of the own products.

In recent years, however, from the viewpoints of the saturation of landfill sites and resource saving, the recycle of resins has been promoted, but it is difficult to reuse the colored packages. In particular, PET bottles [bottles formed by using PET (polyethylene terephthalate) as a fundamental resin] are required to be colorless in a case where they are treated as materials to be reproduced.

Therefore, in the case of the PET bottles colored with coloring agents constituted of conventional chemical substances, it is difficult to decolor them, which makes their recycle severe. This problem is common to the whole plastic packages, but the PET bottles are used in large quantities, and hence, this fact is a particularly serious problem.

As a measure to solve the problem, for example, the packages are decorated by covering the packages with colored labels, and these labels are then separated from the packages prior to their reproduction.

This method permits the recycle of the packages themselves, but it is necessary to peel and separate the labels from the packages after the use of them.

On the other hand, there are cases that coloration is conducted by not a chemical coloring mechanism but a physical coloring mechanism in which the reflection or interference of a light is utilized.

For example, Japanese Patent No. 1037819 (pages 1 to 3) describes pearl-decorated containers constituted of a resin layer containing a mica-based or titanium-based pearl pigment and an opaque resin layer appearing a desired color which is disposed on the inner layer side of the resin layer.

According to such containers, a pearl decoration effect is obtained with the aid of the pearl pigment, so that a high-quality appearance can be created and also it is possible for consumers to enhance buying inclination of the own products by differentiation from other products.

Furthermore, Japanese Patent Laid-Open No. 011369/1997 (pages 2 to 11) describes multilayer resin containers in which at least one layer of multilayer resins constituting the multilayer resin container is a resin layer obtained by mixing an interference color pigment with a thermoplastic resin.

According to such containers, the interference color pigment is mixed with at least one layer of the multilayer resins, so that the productivity of the containers can be improved. In addition, a material cost can be decreased, and the expression of an interference color which finely changes depending on a view angle can beautifully be realized in a stereoscopic state.

Furthermore, Japanese Patent Laid-Open No. 80928/1996 proposes packages, in which a layer containing a scaly thin film having a high refractive index so as to be oriented in the direction of the surface of each package is disposed on the outer side of a thermoplastic resin layer to appear a chromatic color.

In the above packages, however, a mica or titanium pigment or the like is used in large quantities as the scaly thin film, and therefore, the separation of the material is necessary prior to their recycle, which makes their recycle severe.

Therefore, the method of coloration by the above physical coloring mechanism is not allowed in a present recycle process either, as in the method by the aforementioned chemical coloring mechanism.

As described above, in the present packages in which the chemical or physical coloring mechanism is employed, the pigments or dyes blended in the packages cannot be removed in the recycle process.

Therefore, there is a problem that the packages once colored cannot be remanufactured in the form of the transparent packages.

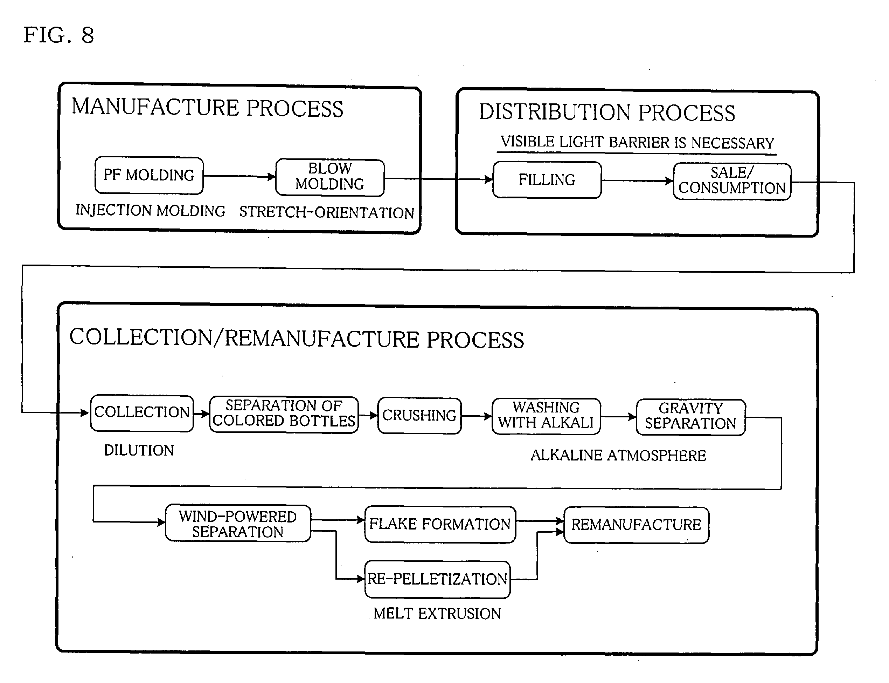

As shown in FIG. 8, a flow of the manufacture of the packages, e.g., the PET bottles to their recycle can be mainly classified into a manufacture process, a distribution process, and a collection/remanufacture process.

Namely, the PET bottles manufactured by blow molding injection-molded preforms to stretch and orientate them are filled with contents, sold (consumed), and then collected. The collected PET bottles are separated from colored bottles, crushed, washed to separate impurities therefrom, and then reproduced in the form of flakes or pellets.

In such a flow of the manufacture and the recycle, the injection molding and blow molding are conducted in the manufacture process, and melt extrusion is conducted in a re-pelletization step in a collection/remanufacture process. In these steps, stimulations of a high temperature, a high pressure and the like are applied to the material.

However, even when passed through the steps in which such stimulations are applied, the pigments or dyes still remain without the disappearance of colors because of their high coloration stability. Namely, the pigments or dyes permanently maintain the coloration once they are mixed with the PET.

Therefore, there arises a problem that the colored PET bottles cannot be used as starting materials for the PET bottles to be re-manufactured.

In view of such present situations, in Japan and in a field of manufacture/recycle of the PET bottles, the manufacture and distribution of the PET bottles which cannot be reused are restrained. In other words, the coloration of the PET bottles is prohibited in principle from the viewpoints of the improvement of a reuse ratio of the PET bottles and the promotion of the recycle.

In Japan, it is mentioned as one item of material evaluation standards which are self-organized standards that the PET bottles should be colorless and transparent.

The material evaluation standards are guideposts established to evaluate whether or not the PET bottles once manufactured are suitable for the reuse and remanufacture, and they are self-organized agreements in the field of the manufacture/recycle of the PET bottles.

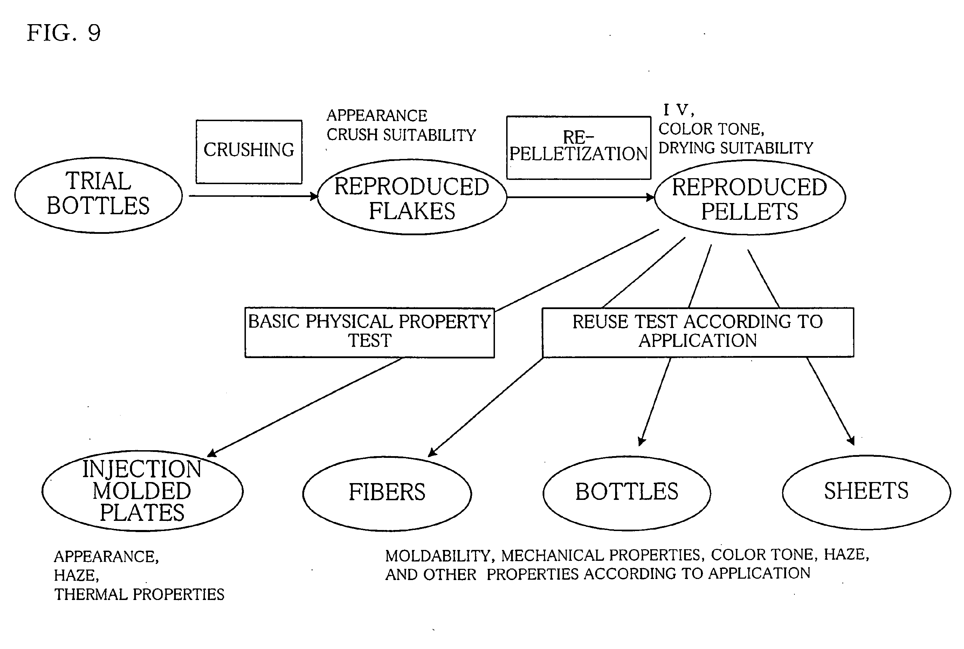

FIG. 9 shows a flow of a reuse suitability test (reuse suitability evaluation) of the PET bottles performed in accordance with the material evaluation standards.

As shown in the drawing, the reuse suitability evaluation is performed for each of reproduced flakes obtained by crushing trial bottles to be evaluated, reproduced pellets obtained by melt molding the reproduced flakes, injection molded plates obtained by injection molding the reproduced pellets, and fibers, bottles and sheets obtained by molding the reproduced pellets.

As evaluation items, there are mentioned "appearance, crush suitability" for the reproduced flakes, "IV, color tone, dry suitability" for the reproduced pellets, "appearance, haze, thermal properties" for the injection molded plates, and "moldability, mechanical properties, color tone, haze, etc." for the fibers, the bottles and the sheets.

Particularly, among these evaluation items, "the color tone" is the evaluation item which is investigated in a wide range including the reproduced pellets, fibers, bottles and sheets.

If the trial bottles are contaminated with a pigment or a dye, they remain colored with the pigment or the like even at a stage where they are processed into the reproduced pellets, and hence, they do not satisfy the evaluation standards of "the color tone". In addition, the color of the trial bottles still remains even at a stage where they are processed into the fibers, the bottles or the sheets, and therefore, the evaluation standards of "the color tone" are not satisfied herein, either.

As described above, the PET bottles mixed with the pigment or the dye do not satisfy the material evaluation standards, and for this reason, they cannot be used as starting materials for the reproduction. Therefore, the coloring of the PET bottles is voluntarily restrained in makers of the PET bottles.

As understood from the above, it is essential from the viewpoint of recycle promotion to evaluate the suitability of the PET bottles to be reused in accordance with the reuse suitability evaluation based on the material evaluation standards. On the other hand, it is also necessary that "the color tone" is evaluated in the suitability test to reject the colored PET bottles.

As mentioned above, however, the coloring of the containers molded as the PET bottles for the purpose of providing functions such as a visible light barrier and a decoration has been desirable from various viewpoints of preventing the change in quality and deterioration of contents therein, promoting the commercialization of new products, differentiating them from other products, promoting the sales of own products, and the like.

In view of such situations, in the field of the manufacture/recycle of the PET bottles, it has been required to propose a technology of providing consumers with the PET bottles which conform to the evaluation items of the reuse suitability evaluation and simultaneously have functions such as the visible light barrier and the decoration. In other words, there has been desired a technology which is capable of providing the colored PET bottles in a distribution process and simultaneously capable of decoloring the PET bottles in a collection/remanufacture process.

The present invention has been developed in consideration of the above circumstances, and an object of the present invention is to provide a resin composition, a packaging structure and a method for reproduction which permits possessing functions such as the visible light barrier and the decoration in the distribution process, satisfying the evaluation standards of the reuse suitability evaluation in the collection/remanufacture process, and improving of a reuse ratio of the packaging structures to promote the recycle of them.

### Disclosure of the Invention

In order to achieve the object, a resin composition of the first invention according to the present application comprises a matrix resin including a coloring component which comprises a polymer and which has a regular configuration as a coloring principle. In the resin composition, a temperature at which the coloring component is decolored is set so as to be higher than a temperature at which the matrix resin is processed.

In a case where the resin composition is constituted as in the above, the coloring component can be decolored by melting the resin composition at a temperature higher than the processing temperature of the matrix resin in the collection/remanufacture process to destroy the regular configuration of the polymer.

Furthermore, during the processing of containers, the matrix resin can be processed at a temperature equal to or lower than the temperature at which the coloring component is decolored, whereby the coloring component can be introduced thereinto while the colored configuration is maintained. Therefore, in a distribution process, the containers can be brought to the market in a state where the resin composition is colored with the coloring component.

In this specification, the matrix resin means a resin constituting a continuous phase in the resin composition.

More specifically, for example, in a case where PET bottles containing the resin composition of the present invention are formed, the PET bottles are processed in a flow of manufacture/recycle (FIG. 8) as follows.

Since the PET bottles manufactured according to the manufacture process are colored with the coloring component, they can possess and exhibit in the distribution process the functions of the visible light barrier and the decoration by the coloration. Namely, in the distribution process which only requires the functions of the visible light barrier and the like in the flow diagram shown in FIG. 8, the PET bottles can be colored.

In the collection/remanufacture process, the bottles can be decolored by carrying out melt-extrusion at a temperature equal to or higher than the temperature at which the coloring component is decolored. Therefore, even in a case where the reuse suitability evaluation is conducted for products remanufactured through the collection/remanufacture process, the standards of "color tone" can be satisfied.

As described above, the remanufactured products can satisfy the evaluation standards even in the reuse suitability evaluation of the PET bottles and simultaneously can possess the functions of the visible light barrier and the decoration.

In addition, since even the colored PET bottles satisfy the evaluation standards of the reuse suitability evaluation, they can be recycled.

Accordingly, a reuse ratio of the manufactured PET bottles can be enhanced, which leads to the improvement of recycle properties.

In a resin composition which is another embodiment of the first invention, a melting point corresponding to a temperature at which a color of one of a plurality of polymers disappears is higher than a temperature at which the matrix resin is processed, in a case where the coloring component comprises the plurality of polymers.

According to the resin composition constituted as in the above, even in a case where the coloring component is constituted of the plurality of polymers, the regular configuration of the coloring component can be destroyed and the coloring component can be decolored by melt-extruding the resin composition at a temperature higher than the melting point corresponding to the temperature at which the coloring component is decolored, when among the respective melting points of the plurality of polymers, the melting point corresponding to the temperature at which the coloring component is decolored is higher than the temperature at which the matrix resin is processed.

Moreover, during the formation of the containers, the regular configuration of each coloring component is not destroyed in processing the matrix resin at a temperature equal to or lower than the melting point corresponding to the temperature at which the coloring component is decolored. Therefore, the processed containers can be colored.

Furthermore, in a resin composition which is another embodiment of the first invention, the coloring component is a multilayer laminate of two or more resins whose refractive indices are different from each other.

According to the thus constituted resin composition, the coloring component can be colored by a physical coloring mechanism. Therefore, the coloring component can be incorporated in the resin composition to color the resin composition.

Moreover, a packaging structure which is another embodiment of the first invention uses any of the resin compositions mentioned above.

According to the thus constituted packaging structure, the coloring component is incorporated in the matrix resin constituting the resin composition, and a melting point (a temperature at which a color disappears) of the coloring component is higher than a temperature at which the matrix resin is processed. In consequence, the resin composition can be melt-extruded at a temperature higher than the melting point of the coloring component in the collection/remanufacture process, so that the remaining color of the packaging structure can be removed.

Furthermore, in the manufacture process, the packaging structures is processed at the processing temperature of the matrix resin, so that these packaging structures can be colored.

Therefore, in the distribution process, the packaging structures can exhibit functions of the visible light barrier and the decoration.

In addition, as described above, the packaging structures can exhibit the functions of the visible light barrier and the like in the distribution process, and decoloration can be accomplished in the collection/remanufacture process. In consequence, it becomes possible to recycle the packaging structures colored in the manufacture process.

Therefore, a reuse ratio of the packaging structures can be enhanced, which leads to the improvement of recycle properties.

Furthermore, a packaging structure which is another embodiment of the first invention has one or more layers comprising the resin composition and one or more layers comprising a polyester.

According to the thus constituted packaging structure, it is possible to obtain a packaging structure in which the resin composition layer and the polyester layer (e.g., a layer made of polyethylene terephthalate (PET) or the like) are laminated.

Moreover, according to a packaging structure of another embodiment, the matrix resin is a polyester.

According to the thus constituted packaging structure, most of the resin composition layers are made of a polyester. Therefore, if the other resin layers are also made of the polyester, the recycle of the packaging structures can be further promoted.

Moreover, in a packaging structure of another embodiment, at least one polymer of one or more polymers constituting the coloring component is a polyester.

According to the thus constituted packaging structure, the polyester is contained in the coloring component, so that the polyester can also be used herein as in the matrix resin and the other resins, which leads to the improvement of recycle properties.

Furthermore, in a packaging structure of another embodiment, the resin composition is laminated by co-extrusion.

According to the thus constituted packaging structure, the resin composition and PET can be laminated by, for example, co-extrusion.

In this case, a processing temperature of the matrix resin can be the same as, for example, a set temperature of a flow path through which a melted resin is carried, or a set temperature of an extruder.

In a packaging structure of another embodiment, the resin composition is laminated by coating.

According to the thus constituted packaging structure, the lamination can be effected by coating, for example, PET with the resin composition.

In this case, a processing temperature of the matrix resin can be set to, for example, a baking temperature.

A packaging structure which is the second invention is a packaging structure having a configuration where on at least a portion of the surface of the packaging structure, portions which are different in optical characteristics from the above surface are periodically arranged by use of fibrous structures. As such a packaging structure, there is mentioned, for example, a packaging structure in which the portions which are different in optical characteristics are portions which are different in refractive index from the surface of the packaging structure, or a packaging structure in which the portions which are different in optical characteristics are voids formed inside the fibrous structures.

Even such a packaging structure can be decolored by destroying the regular configuration of the fibrous structures by heating as in the case of the first invention.

Moreover, a method for decorating the above packaging structure which is another embodiment of the second invention is a method for decorating the packaging structure wherein the decoration is conducted by forming a configuration in which on at least a portion of the surface of the packaging structure, portions which are different in optical characteristics from the surface are periodically arranged by use of fibrous structures. As various embodiments of such a decoration method, there is mentioned, for example, a method of the decoration by winding the fibrous structures around a surface layer of the packaging structure, a method of the decoration by mixing the fibrous structures with a resin which forms the packaging structure, and a method for decorating the packaging structure with a planar body obtained by processing the fibrous structures.

A packaging structure which is a third invention contains a coloration material, but it is decolored or achromatized by external stimulation after use.

As described above, in a case where the packaging structure is constituted of the coloration material which can be achromatized by the external stimulation, the packaging structure can be colored with a chromatic color which imparts a strong image to the feeling and mentality of a human in the distribution/use of the packaging structures. In a remanufacture process after the use of the packaging structure, the colored image of the packaging structure can be achromatized and weakened, whereby unnecessary coloration with the chromatic color to reproduced articles can be restrained.

Furthermore, in a case where the packaging structure is constituted of the coloration material which can be decolored by the external stimulation, the packaging structure is obtained which is capable of becoming a colored state in the distribution/use of the packaging structure. In a remanufacture stage after use, the packaging structure can be completely decolored, which leads to the improvement of recycle properties.

The above coloration material constituting the packaging structure of the present invention may have a coloring mechanism due to light absorption in a visual light region of the material.

Accordingly, a coloring mechanism of the coloration material constituting the packaging structure is due to the light absorption in the visual light region of the material, and for example, its high coloring ability permits effectively conducting the desired coloration of the packaging structure.

Moreover, the packaging structure of the present invention may take a laminated structure having a layer containing the coloration material.

As described above, in a case where the packaging structure is the laminated structure having the layer containing the coloration material, the coloration material is kneaded with materials constituting layers other than the layer containing the coloration material in the packaging structure and the other packaging structure, for example, in a melt kneading step of reproduction, whereby a surrounding environment of the coloring component can be easily changed. Therefore, in a case of using the coloring component in which a color changes owing to the change of the surrounding environment, the packaging structure remains colored in the distribution/use of the packaging structure, and in the remanufacture stage after use, the packaging structure can be decolored or achromatized.

Furthermore, the packaging structure of the present invention can have one or more layers comprising the coloration material and one or more layers comprising a thermoplastic resin.

In a case where the packaging structure is made as in the above, it is possible to constitute a packaging structure in which the layer comprising the coloration material and a polyester layer (e.g., a layer made of polyethylene terephthalate (PET) or the like) are laminated.

The above coloration material preferably comprises a resin as a main material. Furthermore, the main material resin of the layer comprising the coloration material is preferably the same kind of resin as the thermoplastic resin constituting at least one layer of other layers comprising the thermoplastic resin.

The packaging structures containing the polyester resin as the main material, e.g., PET bottles are distributed in large quantities as drink containers. In consequence, the present invention can be applied to the packaging structures containing the polyester resin as the main material, whereby the PET bottles can easily be recycled, which can effectively reduce environmental deterioration.

In the present invention, there is provided the packaging structure in which a chemical structure of at least one coloring component constituting the coloration material is changed by the external stimulation to decolor or achromatize the packaging structure.

According to the coloring component made as in the above, a chromatic material can be used in which there changes a light absorption wavelength of the material in a visible light region by external stimulation such as physical stimulation typified by heat, a light or change in the surrounding environment. Consequently, in the distribution/use of the packaging structure, it can remain colored, and in a remanufacture stage after use, the packaging structure can be decolored or achromatized.

More specifically, the above external stimulation includes heat, a light and change in the surrounding environment of the above coloring component.

The change in the surrounding environment of the coloring component includes change in a hydrogen ion concentration, change in a polarity, change in a ligand concentration, change in a developer concentration, change in a surrounding resin, and the like.

The application of the external stimulation can change the chemical structure of the coloring component.

Moreover, in the present invention, a chroma difference (a²+b²)^{1/2} between a sheet molded using a resin obtained by reproducing the packaging structure and an achromatic origin is set so as to be 5 or less. In a case where the chroma difference of the reproduced resin is 5 or less, the resin can be evaluated as a colorless state in appearance, so that coloration of remanufactured products with an unnecessary chromatic color can be restrained.

It is to be noted that the evaluation is conducted by molding a reproduced resin obtained by remanufacture into a sheet having a thickness of 0.3 mm, placing a standard white board (X78.42, Y81.00, Z92.32) on the back of the sheet, and then measuring a Hunter Lab of the sheet by a reflection method.

A method of reproduction of packaging structures which is a forth invention comprises collecting the packaging structures, melting them, and carrying out reproduction. In this case, the melting for the reproduction is conducted at a temperature equal to or higher than a temperature at which the coloring component contained in the packaging structures is decolored.

In the above method of the reproduction of the packaging structures, the collected packaging structures are molten at the temperature equal to or higher than the temperature at which the coloring component is decolored, whereby the regular configuration of the coloring component can be destroyed and consequently decolored. Accordingly, the packaging structures can satisfy the reuse suitability evaluation in the collection/remanufacture process.

According to the above method of the reproduction of the packaging structures, the packaging structures can exhibit functions of a visible light barrier and a decoration in a case where the packaging structures are filled with contents and supplied to consumers. Furthermore, in the collection/remanufacture process, the packaging structures are decolored, which makes their recycle possible. Therefore, a reuse ratio of containers and the like processed from the packaging structures can be enhanced, and hence the promotion of their recycle can be expected.

Moreover, as another embodiment of the method of the reproduction, there is a method in which external stimulation is applied to the packaging structures in at least one step of a melting step, a dilution step and an alkali-washing step during reproduction of the packaging structures to decolor or achromatize the packaging structures. It is preferable that the application of the external stimulation is carried out in one step of the melting step, the dilution step and the alkali-washing step of the reproduction of the packaging structures.

For example, the coloration of a plastic packaging structure imparts a beauty to the packaging structure in order to differentiate commercial products from other similar products, and hence, the coloration plays an important role for decoration. However, there is a problem that, in a production step, the colored packaging structure can be used only for products which will be colored in the same color, when molded articles for purge and defective products which are formed during the production are utilized again as parts of starting materials for the products.

As described above, in at least one step of the melting step, the dilution step and the alkali-washing step during reproduction of the packaging structures, the external stimulation is applied to the packaging structures to decolor or achromatize them, whereby the restriction on color tone during remanufacture of colored molded articles is relieved, which can enhance productivity.

It is to be noted that a general product distribution cycle of PET bottles is shown in FIG. 8. More specifically, the manufactured PET bottles are filled with contents and then distributed to the market, and afterward, they are used and discarded by usual consumers. The discarded PET bottles are collected. Then, the bottles which cannot be recycled are separated, and the recyclable bottles are crushed and washed with an aqueous alkali (pH = 10 to 14) (alkali washing step). After other resins and impurities are removed by specific gravity separation or wind-powered separation, the bottles are flaked, melt kneaded (melt kneading step) if necessary, and re-pelletized to reproduce them.

The PET bottles are decolored by stimulation in the dilution step, the alkali washing step or the melt kneading step for the reproduction, whereby the colored packaging structures can be remanufactured without new facilities.

### Brief Description of the Drawings

FIG. 1 is a drawing for illustrating a chemical coloring mechanism and a physical coloring mechanism, and FIG. 1(a) shows the chemical coloring mechanism and FIG. 1(b) shows the physical coloring mechanism.
FIG. 2 is a phase diagram showing a constitution of a coloring component contained in a matrix resin.
FIG. 3 is a sectional view showing a constitution of the packaging structure of the present invention.
FIG. 4 is a sectional view showing another constitution of the packaging structure of the present invention.
FIG. 5 is a drawing showing a section cut in the diameter direction of a fibrous structure used in the present invention, and FIG. 5(a) shows an example of a divided side and FIG. 5(b) shows an example of an island-sea type.
FIG. 6 is a drawing for illustrating a first embodiment of a decoration method of the present invention.
FIG. 7 is a drawing for illustrating a fourth embodiment of the decoration method of the present invention.
FIG. 8 is an explanatory drawing showing a flow from manufacture to recycle of PET bottles (a flow of manufacture/recycle of PET bottles).
FIG. 9 is an explanatory drawing showing a flow of reuse suitability evaluation.

### Best Mode for Carrying out the Invention

The following will explain the present invention in detail.

In this specification, "coloration" and "decoration" have meanings including coloration of a packaging structure with a chromatic color, block of a light having a specific wavelength region so that the light may not pass through the packaging structure, and the like.

### [First invention: Resin composition]

A resin composition of the present invention is characterized in that a coloring component constituted of a polymer and having a regular configuration as a coloring principle is contained in a matrix resin, and a temperature at which the coloring component is decolored is higher than a processing temperature of the matrix resin.

The coloring component is constituted of the polymer.

As the polymer, for example, a thermoplastic polyester can be used. As the thermoplastic polyester, there can be used an aliphatic, an alicyclic or an aromatic polyester which is derived from a dicarboxylic component and a diol component, or a copolymer or a blend thereof. Examples of the dicarboxylic acid component include aromatic dicarboxylic acids such as terephthalic acid, isophthalic acid and naphthalenedicarboxylic acid; aliphatic carboxylic acids such as succinic acid, adipic acid and sebacic acid; and alicyclic dicarboxylic acids such as cyclohexanedicarboxylic acid. Examples of the diol component include aliphatic glycols such as ethylene glycol, diethylene glycol and butanediol; alicyclic glycols such as cyclohexanedimethanol (CHDM); and aromatic diols such as bisphenols. Furthermore, polybasic carboxylic acid components and polyhydric alcohol components having a trivalent or a higher valent functional group can also be used.

More specifically, polyethylene terephthalate (PET), polybutylene terephthalate (PBT), polyethylene naphthalate (PEN), polycarbonates, polyarylates, isophthalic acid-copolymerized PET (PET-I), cyclohexanedimethanol (CHDM)-copolymerized PET, polyesters copolymerized with a soft segment constituting a polyolefin or a polyether, and the like are suitably used.

Moreover, a thermoplastic polyamide can be used. As the thermoplastic polyamide, there can be used an aliphatic, an alicyclic or an aromatic polyamide which is derived from a dicarboxylic component and a diamine component; a polyamide derived from an aminocarboxylic acid or a lactam thereof; or a copolymer or a blend thereof. Examples of the dicarboxylic component include aliphatic dicarboxylic acids such as succinic acid, adipic acid, sebacic acid and decanedicarboxylic acid; and aromatic dicarboxylic acids such as terephthalic acid and isophthalic acid. Examples of the diamine component include linear and branched aliphatic diamines such as 1,6-diaminohexane, 1,8-diaminoocatane and 1,10-diaminodecane; alicyclic diamines such as bis(aminomethyl)cyclohexane and bis(4-aminocyclohexyl)methane; and aromatic diamines such as m-xylylenediamine and p-xylylenediamine. Furthermore, examples of the aminocarboxylic acid include aliphatic aminocarboxylic acids such as ω-aminocaproic acid, ω-aminooctanoic acid and ω-aminoundecanoic acid; and aromatic aliphatic aminocarboxylic acids such as p-aminomethylbenzoic acid and p-aminophenylacetic acid.

More specifically, 6-nylon, 6,6-nylon, 11-nylon, 12-nylon, 6,10-nylon, 6,12-nylon, MXD6 (m-xylyleneadipamide) nylon and the like are suitably used.

Furthermore, an olefin resin can also be used as the polymer. Examples of the olefin resin include polyethylenes (PE) such as low-density polyethylene (LDPE), medium-density polyethylene (MDPE), high-density polyethylene (HDPE), linear low-density polyethylene (LLDPE) and linear very low-density polyethylene (LVLDPE); polypropylene (PP), ethylene-propylene copolymers, polybutene-1, ethylene-butene-1 copolymers, propylene-butene-1 copolymers, ethylene-propylene-butene-1 copolymers, ethylene-vinyl acetate copolymers, ionically crosslinked olefin copolymers (ionomers), and blends thereof. Additionally usable examples of the olefin resin include polyacrylonitrile, polystyrene, polymethylpentene, polyvinyl alcohol, polymethyl methacrylate, cyclic olefinic copolymers (COC), and fluorinated polymers. Moreover, polymers capable of taking a cholesteric liquid crystalline structure can be used. For example, celluloses such as hydroxypropyl cellulose, and polypeptides such as polyglutamate esters can be mentioned. Furthermore, there can be used polymers in which the cholesteric liquid crystalline structure can be fixed by providing a crosslinking reaction site in each molecule or including it in a curable matrix, and as such polymers, common curable resins can be employed.

Additionally, at least one polymer of one or more polymers contained as coloring components may be a polyester.

Typical examples of the polyester include polyethylene terephthalate (PET), polybutylene terephthalate (PBT), polyethylene naphthalate (PEN), polycarbonates, polyarylates, isophthalic acid-copolymerized PET (PET-I), cyclohexanedimethanol (CHDM)-copolymerized PET, and polyesters copolymerized with a soft segment constituting a polyolefin or a polyether. Since these polymers belong to the polyesters, the processing of the polyester resin into the matrix resin or another layer can promote the recycle of the resin composition.

Moreover, the coloring component has a regular configuration as a coloring principle. This means that the coloring component appears a color by a physical coloring mechanism.

The coloring principle is classified into two kinds of chemical coloring and physical coloring.

As to the chemical coloring, when a white light including lights having a plurality of wavelengths enters a material, coloring occurs owing to absorption of a light in a wavelength range showing a specific color by the material.

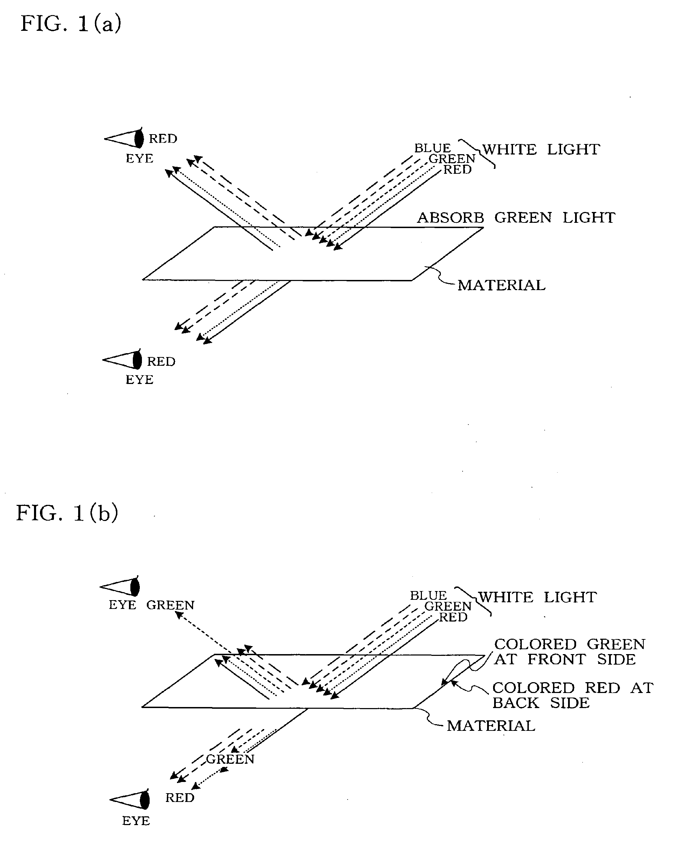

For example, as shown in FIG. 1(a), when the material absorbs a light in a wavelength range showing green color, lights of a reflected light and a transmitted light which enter eyes are observed as a red color which is a complimentary color of the green color in both cases of the lights.

According to the principle of the chemical coloring, coloring occurs owing to absorption of a light having a specific wavelength (a light having a selected wavelength) by a substance with state energy transition of a chemical species.

The wavelength of the light absorbed by the substance depends on a chemical structure of the substrate. Therefore, for the appearance of a specific color, a specific chemical substance is required to be used. Examples of the specific chemical substance include a pigment and a dye.

On the other hand, as to the physical coloring, when the white light enters the material, the coloring occurs owing to diffraction, interaction, scattering or the like of a light in a wavelength range showing a specific color on the material.

For example, as shown in FIG. 1(b), when the material strongly reflects a light in a wavelength range showing green color, the light which enters eyes as a reflected light is observed as a green color. On the contrary, a transmitted light is observed as a red color which is a complimentary color of green color.

The coloring by this physical coloring mechanism is different from the case of the chemical coloring mechanism, and the light is not emitted based on properties inherent to the material but the coloring is achieved owing to formation of a certain configuration on an incident plane of the light. Namely, the coloring occurs owing to the reflection of the light having a specific wavelength (a light having a selected wavelength) by diffraction or interference due to a regular configuration or a difference between refractive indices which the material has.

As characteristics of this physical coloring mechanism, the coloring occurs so long as there is the regular configuration formation even in the general-purpose material only, in contrast to the chemical coloring mechanism; decoloring is easily possible by the destruction of the regular configuration; and this mechanism is effective under a recycle regulation where usable materials tend to be limited.

Of these characteristics, a particularly important feature to accomplish the present invention is that the decoloring can be easily made by the destruction of the regular configuration.

When the coloring component is incorporated into the matrix resin, the resin composition containing the matrix resin is colored. Then, when the coloring component is heated at a temperature equal to or higher than a decoloring temperature (a temperature at which the coloring component is decolored), the regular configuration is destroyed to decolor it.

When this feature is utilized in a flow of manufacture/recycle of PET bottles, the following progress will be made.

In a manufacture process, when the coloring component is incorporated into the matrix resin, a PET bottle formed by laminating the resin composition containing the matrix resin and a PET resin is colored. Then, in the collection/remanufacture process, when the coloring component is heated, the regular configuration is destroyed to decolor it.

Therefore, in the distribution process in the flow of the manufacture/recycle of the PET bottles, the colored PET bottles can be brought to the market. Thereafter, in the collection/remanufacture process, they can be decolored by heating or the like, so that the evaluation standards of "color tone" can be satisfied in the reuse suitability evaluation.

In consequence, the coloring component which appears the color by the physical coloring mechanism is incorporated into the resin composition, and in the distribution process, the PET bottles can possess the functions of the visible light barrier and the decoration. Additionally, in the collection/remanufacture process, the evaluation standards of the reuse suitability evaluation are satisfied, and the remanufacture of the PET bottles becomes possible.

Examples of the configuration of the coloring component include a spiral configuration typified by cholesteric liquid crystals, and a laminate configuration.

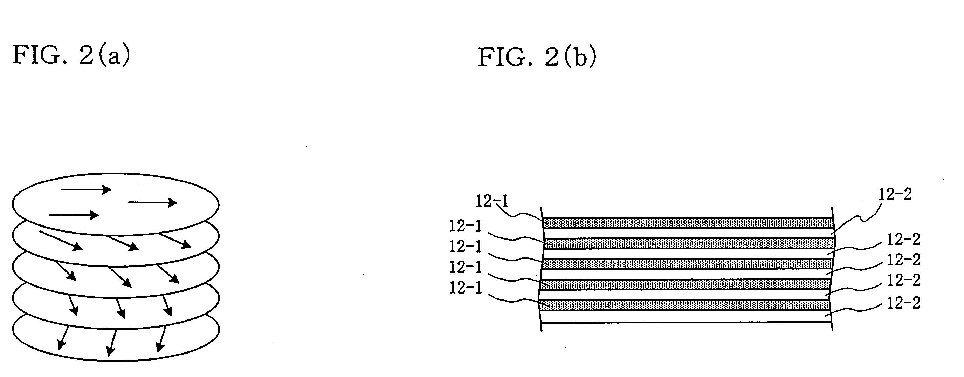

As shown in FIG. 2(a), the cholesteric liquid crystals have a molecular arrangement of a spiral periodical configuration, and coloring occurs on the basis of a reflection light due to the molecular arrangement.

When molecules are arranged in accordance with a spiral period = P, there is selectively reflected only a light of a wavelength width Δλ = pΔn (Δn = anisotropy of a refractive index) around a wavelength λ = np (wherein n is an average refractive index of the liquid crystals) among lights introduced in parallel to a spiral axis, and lights within the other wavelength range are transmitted.

The reflection by the cholesteric liquid crystals is more complex as compared with a simple diffraction grating, because the reflection is due to the spiral configuration. In counterclockwise cholesteric liquid crystals, a light which satisfies wavelength conditions is divided into a right circularly polarized light and a left circularly polarized light, and only the former is reflected and the latter is directly transmitted. In clockwise cholesteric liquid crystals, reverse behavior occurs. When an incident light has an incident angle θ, a light of a wavelength which satisfies Bragg's reflection conditions of p·-cosθ = λ/n is selectively reflected.

Moreover, the coloring component can be constituted of a multilayer laminate of two or more resins having different refractive indices. For example, as shown in FIG. 2(b), in the laminate structure, two polymers, polymer A12-1 and polymer B12-2, having different refractive indices are laminated. The laminate of the two polymers, polymer A12-1 and polymer B12-2, can be formed by, for example, co-extrusion.

Since the coloring component is constituted as in the above, coloring can be effected by a physical coloring principle, and in addition, decoloring can be effected by destroying a regular configuration of the multilayer laminate constituting the coloring component.

Furthermore, when the coloring component is constituted of a plurality of polymers, a melting point corresponding to a temperature at which decoloring occurs among melting points of the plurality of polymers is set to be higher than a processing temperature of the matrix resin.

Usually, when the coloring component is constituted of the plurality of polymers, these polymers have mutually different melting points. The decoloring of the coloring component occurs owing to destruction of the regular configuration which is brought about by melting at least one polymer of the plurality of polymers.

Therefore, in a case where the plurality of polymers constituting the coloring component have, for example, melting points of 250°C, 260°C and 270°C, respectively, and when the destruction of the regular configuration finally occurs by heating the coloring component at 260°C to effect the decoloring, a temperature of 260°C is a discoloring temperature of the coloring component and neither 250°C nor 270°C is the discoloring temperature of the coloring component.

As described above, in the manufacture process, the resin composition can be colored by molding it at a temperature equal to or lower than a temperature at which the coloring component is decolored (e.g., 200°C). In the collection/remanufacture process, the resin composition can be decolored by melt extrusion or the like at a temperature equal to or higher than a temperature at which the coloring component is decolored (e.g., 260°C).

Furthermore, the coloring component is incorporated in the matrix resin.

Since the coloring component is incorporated in the matrix resin, the resin composition having a matrix resin layer can be colored.

As the matrix resin, for example, a thermoplastic polyester can be used. As the thermoplastic polyester, there can be used an aliphatic, an alicyclic or an aromatic polyester which is derived from a dicarboxylic component and a diol component, or a copolymer or a blend thereof. Examples of the dicarboxylic component include aromatic dicarboxylic acids such as terephthalic acid, isophthalic acid and naphthalenedicarboxylic acid; aliphatic carboxylic acids such as succinic acid, adipic acid and sebacic acid; and alicyclic dicarboxylic acids such as cyclohexanedicarboxylic acid. Examples of the diol component include aliphatic glycols such as ethylene glycol, diethylene glycol and butanediol; alicyclic glycols such as cyclohexanedimethanol (CHDM); and aromatic diols such as bisphenols. Furthermore, polybasic carboxylic acid components and polyhydric alcohol components having a trivalent or a higher valent functional group can also be used.

Suitably usable typical examples of the matrix resin include polyethylene terephthalate (PET), polybutylene terephthalate (PBT), polyethylene naphthalate (PEN), polycarbonates, polyarylates, isophthalic acid-copolymerized PET (PET-I), cyclohexanedimethanol (CHDM)-copolymerized PET, and polyesters copolymerized with a soft segment constituting a polyolefin or a polyether.

Moreover, a thermoplastic polyamide can be used as the matrix resin. As the thermoplastic polyamide, there can be used an aliphatic, an alicyclic or an aromatic polyamide derived from a dicarboxylic component and a diamine component; a polyamide derived from an aminocarboxylic acid or a lactam thereof; or a copolymer or a blend thereof. Examples of the dicarboxylic component include aliphatic dicarboxylic acids such as succinic acid, adipic acid, sebacic acid and decanedicarboxylic acid; and aromatic dicarboxylic acids such as terephthalic acid and isophthalic acid. Examples of the diamine component include linear or branched aliphatic diamines such as 1,6-diaminohexane, 1,8-diaminoocatane and 1,10-diaminodecane; alicyclic diamines such as bis(aminomethyl)cyclohexane and bis(4-aminocyclohexyl)methane; and aromatic diamines such as m-xylylenediamine and p-xylylenediamine. Furthermore, examples of the aminocarboxylic acid include aliphatic aminocarboxylic acids such as ω-aminocaproic acid, ω-aminooctanoic acid and ω-aminoundecanoic acid; and aromatic aliphatic aminocarboxylic acids such as p-aminomethylbenzoic acid an p-aminophenylacetic acid.

More specifically, 6-nylon, 6,6-nylon, 11-nylon, 12-nylon, 6,10-nylon, 6,12-nylon, MXD6 (m-xylyleneadipamide) nylon and the like are suitably used.

Furthermore, an olefin resin can also be used as the matrix resin. Examples of the olefin resin include polyethylenes (PE) such as low-density polyethylene (LDPE), medium-density polyethylene (MDPE), high-density polyethylene (HDPE), linear low-density polyethylene (LLDPE) and linear very low-density polyethylene (LVLDPE); polypropylene (PP), ethylene-propylene copolymers, polybutene-1, ethylene-butene-1 copolymers, propylene-butene-1 copolymers, ethylene-propylene-butene-1 copolymers, ethylene-vinyl acetate copolymers, ionically crosslinked olefin copolymers (ionomers), and blends thereof. In addition thereto, there can be used polyacrylonitrile, polystyrene, polymethylpentene, polyvinyl alcohol, polymethyl methacrylate, cyclic olefinic copolymers (COC), and fluorinated polymers.

Of the above polymers, particularly suitable resins as the matrix resin constituting the resin composition of the present invention are polyethylene terephthalate (PET), polybutylene terephthalate (PBT), polyethylene naphthalate (PEN), polycarbonates, polyarylates, isophthalic acid-copolymerized PET (PET-I), cyclohexanedimethanol (CHDM)-copolymerized PET, and polyesters copolymerized with a soft segment constituting a polyolefin or a polyether. In view of the fact that these resins belong to polyesters, if the polyester resin is selected as a resin which is laminated together with the matrix resin, the recycle properties of the packaging structures can be enhanced.

Moreover, a processing temperature of the matrix resin is set so as to be lower than a temperature at which the coloring component is decolored (decoloring temperature).

For example, when the decoloring temperature of the coloring component is 270°C, it is suitable to use the matrix resin having a processing temperature of about 200°C.

When such a temperature is set, the following effects are obtained in the flow of the manufacture/recycle of the resin composition (packaging structures, especially PET bottles).

In a manufacture process, when multilayer packaging structures of a PET resin and a resin composition are processed, for example, by adjusting a set temperature of a flow path introducing a melted resin in co-injection molding or a set temperature of an extruder to 200°C, the coloring component is not destroyed. In consequence, the PET bottles can be colored and distributed in the market in a colored state. Thereafter, in the collection/remanufacture process, when a step such as melt extrusion is conducted at a high temperature of 270°C or higher, the coloring component can be destroyed to effect decoloring.

Therefore, in the distribution process, the PET bottles to which functions of a visible light barrier and the like are imparted by the coloration can be provided for consumers. In the collection/remanufacture process, the decoloring is effected, so that the reuse suitability evaluation is satisfied. Accordingly, the reutilization of the colored PET bottles is possible.

The resin composition of the present invention can be blended with known additives for the resin such as a filler, a colorant, a heat-resistant stabilizer, a light-resistant stabilizer, an antioxidant, an antiaging agent, a light stabilizer, a UV absorber, an antistatic agent, a lubricant such as a metal soap or a wax, a resin for modification and a rubber in accordance with a known prescription.

When the resin composition is blended with, for example, the lubricant, it is possible to reduce a load to the resin composition due to shearing during melt processing and to improve inroads of a resin into a screw of an extruder.

It is to be noted that the resin composition of the present invention is desirably molded as one or more layers of a plurality of layers that the laminate has.

The resin composition and the laminate can be used as packaging materials of films and sheets, and additionally, as packaging materials of cups, trays, bottles and tube containers.

### [Packaging structure]

Typical examples of a packaging structure which is another embodiment of the first invention include packages such as films and sheets, and containers such as cups, trays and bottles. However, these packaging structures use the above resin composition and contain at least one layer comprising the resin composition (hereinafter referred to as "coloration layer").

Therefore, the packaging structure is colored with the coloring component incorporated in the coloration layer. Moreover, the coloring component is decolored at a temperature (decoloring temperature) higher than a processing temperature of the matrix resin which is the coloration layer. Therefore, the packaging structure can be colored in the manufacture process, and in the distribution process, the thus colored packaging structure can be filled with contents and then brought to the market. In the collection/remanufacture process, the packaging structure can be melted at the decoloring temperature and hence decolored, whereby the packaging structure becomes reusable.

However, the packaging structure can be processed with the resin composition alone. Moreover, it can also be processed by laminating the coloration layer and a layer constituted of one or more other resins.

The resin layer other than the coloration layer constituting the packaging structure can be suitably selected from thermoplastic resins and thermosetting resins, depending on a use manner, required functions and the like.

Examples of the resin to be selected include mentioned olefin resins, thermoplastic polyester resins, and barrier resins.

Examples of the olefin resins include low-density polyethylene (LDPE), medium-density polyethylene (MDPE), high-density polyethylene (HDPE), linear low-density polyethylene (LLDPE), linear very low-density polyethylene (LVLDPE), polypropylene (PP), ethylene-propylene copolymers, polybutene-1, ethylene-butene-1 copolymers, propylene-butene-1 copolymers, ethylene-propylene-butene-1 copolymers, ethylene-vinyl acetate copolymers, ionically crosslinked olefin copolymers (ionomers), and blends thereof.

On the other hand, examples of the thermoplastic polyester resins include polyethylene terephthalate (PET), polybutylene terephthalate (PBT), polyethylene naphthalate (PEN), polycarbonates, polyarylates, isophthalic acid-copolymerized PET (PET-I), cyclohexanedimethanol (CHDM)-copolymerized PET, and polyesters copolymerized with a soft segment constituting a polyolefin or a polyether.

Moreover, examples of the barrier resins include ethylene-vinyl alcohol copolymers (EVOH), cyclic olefinic copolymers (COC), especially copolymers of ethylene with cyclic olefins (APEL manufactured by Mitsui Chemicals, Inc., etc.), and m-xylyleneadipamide (MXD6).

Between the respective resin layers, an adhesive resin can also be interposed, if necessary. As such an adhesive resin, there can be mentioned thermoplastic resins each having in a main chain or a side chain a carbonyl group based on a carboxylic acid, a carboxylic anhydride, a carboxylate salt, a carbamide or a carboxylate ester. A suitable example of the adhesive resin is one or a combination of two or more of ethylene-acrylic acid copolymers, ionically crosslinked olefin copolymers, maleic anhydride-grafted polyethylene, maleic anhydride-grafted polypropylene, acrylic acid-grafted polyolefins, ethylene-vinyl acetate copolymers, copolymerized polyesters, and copolymerized polyamides.

However, it is particularly preferable that the resin layer other than the coloration layer constituting the packaging structure is a layer made of the polyester resin.

When the resin layer other than the coloration layer is the layer made of the polyester resin and if the matrix resin of the coloration layer is the polyester-based resin, the recycle properties of the packaging structure can be enhanced. Moreover, when a part or all of the plurality of polymers constituting the coloring component are made of the polyester-based resin, the recycle properties of the packaging structure can be further enhanced.

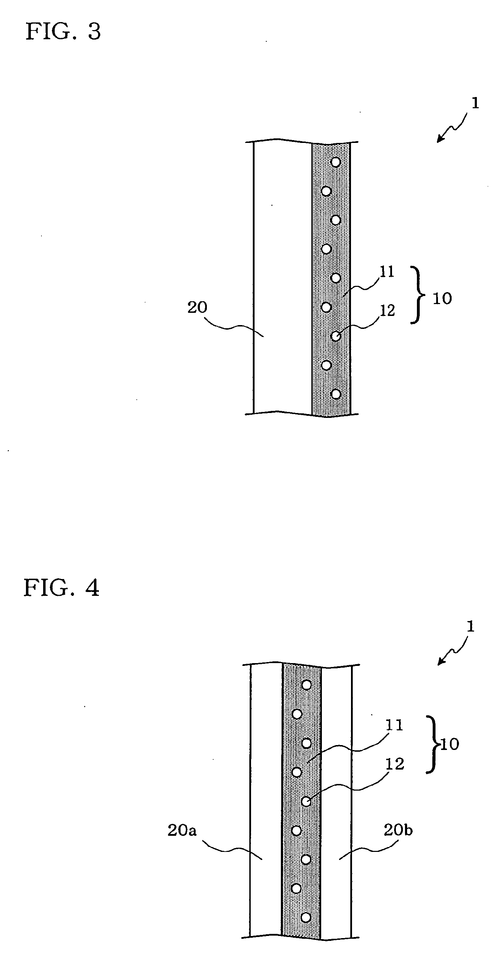

The laminated packaging structure is shown in FIG. 3. As shown in the same drawing, the packaging structure can be processed by laminating a coloration layer (a layer made of a matrix resin 11 containing a coloring component 12) 10 and another resin layer 20.

In the same drawing, the packaging structure has one layer of the coloration layer 10 and one layer of the other resin layer 20, but each layer is not limited to one layer. For example, as shown in FIG. 4, one or both of the other layer 20 and the coloration layer 10 may have two or more layers.

The coloration layer of the packaging structure can be laminated by co-extrusion processing.

The co-extrusion processing is a method of forming a laminate structure by plasticizing a plurality of melted resins separately, guiding them through a predetermined melted resin flow path, and joining them in a multilayer die or a nozzle. The following shows examples of the co-extrusion processing.

The packaging structure, e.g., a multilayer film, sheet or tube can be processed by extruding resins into a predetermined form through a multiple multilayer T-die, a circular die (ring die) and the like by using as many extruders as the kinds of resins. The film processed through the T-die is biaxially stretched to form a biaxially stretched film. Moreover, the multilayer film or sheet can also be obtained by an extrusion-coating method, a sandwich lamination method, or a dry lamination of pre- processed films.

These films or sheets can be subjected to means such as vacuum forming, pneumatic forming, bulging or plug-assist forming to obtain, e.g., cup-like or tray-like containers.

Moreover, the formation of a multilayer bottle from a parison, a pipe or a preform can be easily carried out by extruding it into a predetermined form through a multiple multilayer die by using as many extruders as the kinds of resins, pinching it off with a pair of split molds, and blowing a fluid into it.

Furthermore, a multilayer preform which is a precursor for the multilayer bottle can be molded by use of a co-injection molding method. For the formation of the multilayer preform, there can be used as many plasticizing apparatuses as the kinds of resins, a molding machine equipped with hot runners for guiding the melted resins into a mold, and a simultaneous injection method, a sequential injection method or another method. Moreover, a co-compression molding method can also be used. The multilayer preform can be molded by extruding the resins into the form of predetermined resin masses through a multiple multilayer die by use of as many extruders as the kinds of resins, and then compression molding them with a mold.

The preform is adjusted or heated to a stretchable temperature while heat at the preform molding is maintained or after the molded preform is cooled. Afterward, the preform is stretched mechanically in an axial direction by a stretch rod in a product mold whose temperature is adjusted to a predetermined temperature, and blow-stretched in a circumferential direction by a fluid pressure, whereby a stretched blow bottle can be molded.

The coloration layer of the packaging structure can be laminated by coating.

The coating lamination can be carried out by first dispersing the coloring component in a curable base material, using an additive such as a solvent and a dispersant if necessary to prepare a coating material, applying the coating material onto the surface of the other resin layer by a known way such as gravure coating, spray coating or dip coating, and then curing it by means of heating or UV irradiation to form a coating film thereon.

This technique can also be used to obtain the packaging structure in which the coloration layer and the other resin layers are laminated.

### [Second invention: Packaging structure]

A packaging structure of the second invention is decorated by applying a physical coloring mechanism. Namely, a fibrous structure is used on at least a portion of the surface of the packaging structure to form a configuration where portions which are different in optical characteristics from the surface are periodically arranged, whereby a light is interfered/diffracted to effect coloring.

The "at least a portion" of the packaging structure means a portion or all of the package.

The "surface" of the packaging structure means a front side of the surface forming the package or a section in the surface. Namely, the decoration by use of the fibrous structure includes a case of the decoration by arranging the fibrous structure on the surface forming the package, and a case of the decoration by incorporating the fibrous structure into a wall portion of the package.

The "main material resin" of the packaging structure means a resin forming the respective portions of the packaging structure, e.g., inner and outer layers, an intermediate layer and an adhesive layer. Namely, it contains a resin supporting the strength of the packaging structure, a functional resin having functions of gas barrier properties, moisture barrier properties, gas absorbing properties, light controlling properties and the like, an adhesive resin having a function for bonding the respective layers of the multilayer package, and another resin.

The fibrous structure to be used in the present invention has portions which are different in optical characteristics from the main material resin of the packaging structure. The optical characteristics include, for example, refractive index, reflectance, transmittance, absorbance, and polarization degree.

As the fibrous structure, there can be used, for example, a very fine fiber, a fiber having voids therein, or a composite fiber made of a non-compatible resin of an island-sea structure.

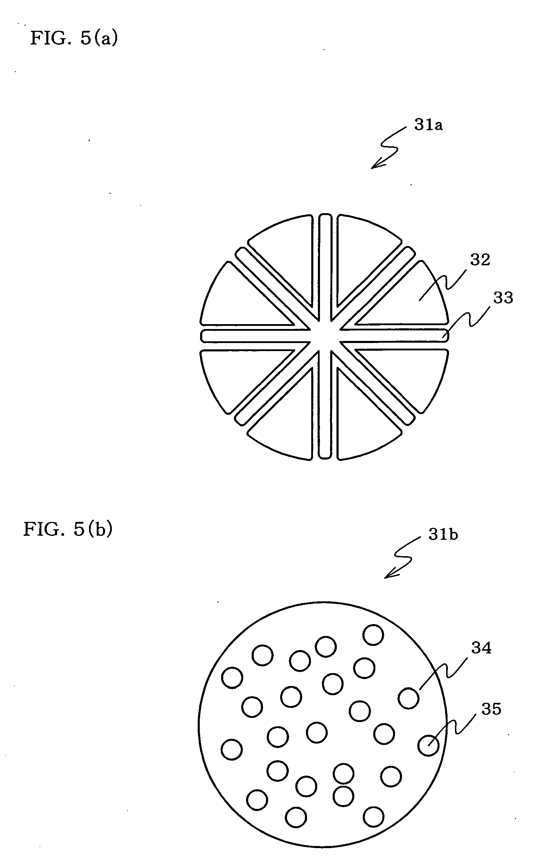

In FIG. 5, as examples of the fibrous structure, sections in a diameter direction are shown.

FIG. 5(a) shows an example of a divided type fibrous structure 31a, where its section is constituted of fan blade-shaped portions 32 and substantially linear portions 33. Since the optical characteristics of these portions are different from those of the surface of the packaging structure, the light is refracted and interfered to effect the coloring.

FIG. 5(b) shows an example of an island-sea type fibrous structure 31b, where its section has a configuration that the plurality of very fine fibers are contained as island portions 35 in a fiber outer periphery (sea portion 34). Since the optical characteristics of the very fine fibers constituting the island portions 35 or the sea portion 34 are different from those of the surface of the packaging structure, the light is refracted and interfered to effect the coloring.

In order to form the configuration that the portions which are different in optical characteristics are periodically arranged, a resin which is different in, e.g., the refractive index from the surface of the packaging structure is used as the fibrous structure.
For example, in FIG. 5(b), the sea portion 34 may be made of the same resin as the main material resin of the packaging structure, and the island portions 35 may be made of a resin which is different in the refractive index from the main material resin of the packaging structure. As the resin for the island portions, there can be considered combinations of thermoplastic polyesters such as polyethylene terephthalate (PET), polyethylene isophthalate, polybutylene terephthalate, polyethylene naphthalate, polycarbonates, polyarylates, copolymers of monomers forming the above resins and copolymers of cyclohexanedimethanol with monomers forming the above resins, polyethylene (PE), polypropylene (PP), polystyrene, cyclic olefinic copolymers, ethylene-vinyl alcohol copolymers, nylon resins, vinyl chloride resins, adhesive resins, polyamide resins, various engineering plastics such as polyimides, and carbon nanotubes.

Moreover, it is also possible to change the refractive index by forming the island portions 35 as the voids and forming the sea portion 34 from a resin. In this case, the refractive index of the voids shows the same value (about 1.0) as that of air, which is different from the refractive index of the resin portion (about 1.3 to about 1.5).

The periodical arrangement configuration formed by the fibrous structure depends on a wavelength of a color which should be appeared or a light which should be blocked. For example, in the case of the fibrous structure having the island-sea section as shown in FIG. 5(b), the diameter of the island portion is properly in a range of 0.1 µm to 5 µm in order to block lights from UV region to IR ray. Moreover, when an arrangement period which acts on lights having wavelengths of 0.4 µm to 0.7 µm in a visible light region is formed, the coloring of an optional color is possible.

The diameter of the fibrous structure is preferably from 0.1 µm to 200 µm from the viewpoints of a decoration effect and manufacture.

A periodicity of the periodical arrangement configuration formed by use of the fibrous structure is not necessarily complete. Defects such as partial disappearance or unevenness of the periodicity and discontinuation of the periodical configuration are allowable, as long as the periodicity is maintained as a whole.

For manufacturing the fibrous structure, for example, a method for manufacturing the very fine fibers can be applied. The process for manufacturing the very fine fibers usually contains a step of extruding a resin for the sea portion and a resin for the island portions separately through a multilayer die. A shape of the island portions, a fiber diameter and a arrangement state are controlled by a nozzle shape of an extrusion die for the island portions. Suitable determination of the nozzle shape permits manufacturing the very fine fibers having the periodical arrangement configuration.

Subsequently, a method of decorating the packaging structure by utilization of the above fibrous structure will be described in accordance with an example in which the method is applied to plastic bottle containers.

The plastic bottle containers can be molded by molding means of the usual bottle containers. For example, they can be obtained by subjecting preforms to stretching blow molding.

As plastic materials which are used to form the plastic bottle containers, for example, preferable are thermoplastic polyesters such as polyethylene terephthalate (PET), polyethylene isophthalate, polybutylene terephthalate, polyethylene naphthalate, polycarbonates, polyarylates, copolymers of monomers forming the above resins and copolymers of cyclohexanedimethanol with monomers forming the above resins, polyethylene (PE), polypropylene (PP), polystyrene, cyclic olefinic copolymers, ethylene-vinyl alcohol copolymers, nylon resins, vinyl chloride resins, adhesive resins, blends of these resins, and blends of these resins with other resins. Particularly, ethylene terephthalate-based thermoplastic polyesters such as polyethylene terephthalate are preferable.

### [First embodiment]

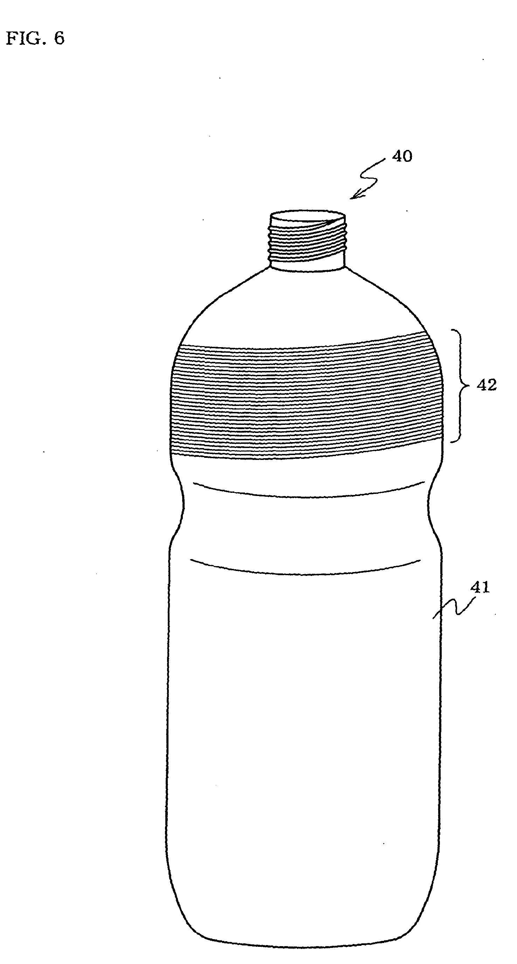

FIG. 6 is a drawing for explaining a first embodiment of a decoration method using a fibrous structure.

In this embodiment, a plastic bottle container is decorated by winding the fibrous structure around the plastic bottle container.

In FIG. 6, a fibrous structure 42 is wound around a body portion 41 of a plastic bottle container 40. In a postion on which the fibrous structure 42 is wound, a phenomenon such as interference or reflection of a light occurs due to an optical periodical configuration formed by the fibrous structure, so that the plastic bottle container is decorated.

For example, in a case where very fine fibers of an island-sea structure shown in FIG. 5(b) is used as the fibrous structure, there is obtained a constitution that the very fine fibers constituting the island portions are wound around the body portion 41 in a circumferential direction at regular intervals. In consequence, a periodical arrangement configuration of the sea portions and the island portions is formed.

At this time, when the sea portions are made of the same material as the main material resin of the plastic bottle container 40 and the fibrous structure 42 is fused to the bottle container 40 by heating, the body portion 41 and the fibrous structure 42 can be integrated.

### [Second embodiment]

In this embodiment, a fibrous structure or an article obtained by processing the fibrous structure into a planar body is mixed with a main resin of a plastic bottle container, so that portions having different optical characteristics contained in the fibrous structure are periodically arranged on the surface of the container to decorate the container.

The article obtained by processing the fibrous structure into the planar body is, for example, a nonwoven fabric or a textile.

The fibrous structure or the article obtained by processing the fibrous structure into the planar body is mixed with the main resin of the plastic bottle container, and the resultant mixture is then formed into a preform by a usual method, e.g., injection molding.

A length of the fibrous structure and a size of the planer body are suitably adjusted in accordance with a manufacture process of the container.

The preform containing the fibrous structure or the article obtained by processing the fibrous structure into the planar body is subjected to, e.g., stretch blow molding, whereby the decorated plastic bottle container can be obtained.

In the present embodiment, the portions which are contained in the fibrous structure and which are different in optical characteristics from the surface of the plastic bottle container are neither melted nor destroyed by heat or the like during the processing of the packaging structure.

For the purpose, for example, the very fine fibers having the island-sea structure shown in FIG. 5(b) are used. In a case where polyethylene terephthalate is used as the main resin of the bottle container, the same polyethylene terephthalate as the main material is used for the sea portion, and as the resin for forming the island portions, there is used a resin having a melting point higher than that of polyethylene terephthalate, e.g., polyethylene naphthalate, carbon nanotube or an engineering plastic such as a polyimide.

When such a fibrous structure is used, PET constituting the sea portion is melted and resultantly integrated with the main material during the mixing with PET which is the main material resin, but the very fine fibers constituting the island portions are not melted. Therefore, on the surface of the container, there can be formed a configuration in which the portions made of the main resin and the portions made of the very fine fibers (island portions) are periodically arranged.

### [Third embodiment]

In the present embodiment, a fibrous structure in which island portions are voids, or an article obtained by processing into a planar body the fibrous structure wherein the island portions are the voids is mixed with a main resin of a plastic bottle container, so that the voids contained in the fibrous structure are periodically arranged on the surface of the container to decorate the container.

The fibrous structure or the article obtained by processing the fibrous structure into the planar body is mixed with the main resin of the plastic bottle container, and then processed into a preform by a usual method, e.g., injection molding.

The preform containing the fibrous structure or the article obtained by processing the fibrous structure into the planar body can be subjected to, for example, stretch blow molding to obtain the decorated plastic bottle container.

In a case where polyethylene terephthalate is used as the main resin of the bottle container and the same polyethylene terephthalate as the main material is used for the sea portion of the fibrous structure, the fibrous structure or the article obtained by processing the fibrous structure into the planar body is mixed with PET which is the main material resin, whereby PET constituting the sea portion is melted and resultantly integrated with PET of the main material. In consequence, on the surface of the container, there can be formed a configuration in which the portions made of the main resin and the portions constituted of the voids (island portions) are periodically arranged.

### [Fourth embodiment]

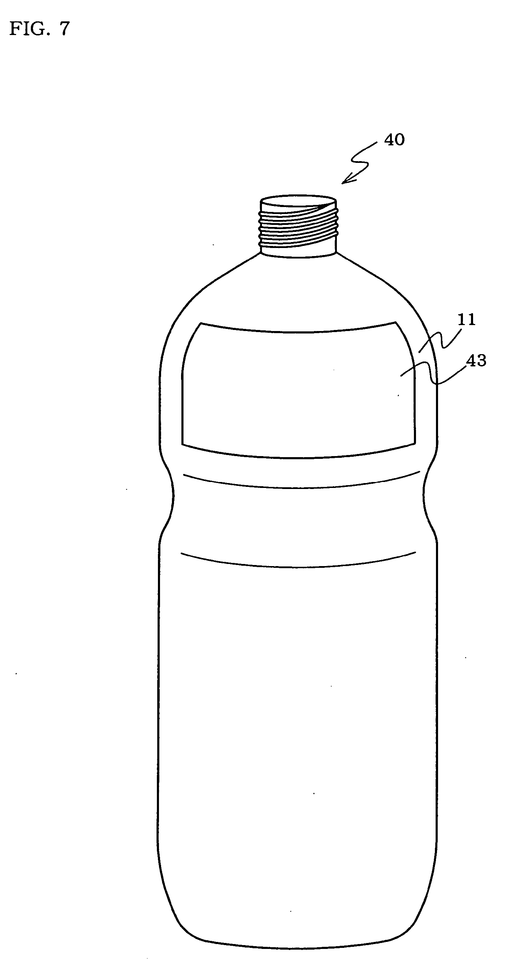

FIG. 7 is a drawing for explaining a fourth embodiment of the decoration method using a fibrous structure.

In this embodiment, an article obtained by processing the fibrous structure into a planar body is stuck onto a packaging structure to thereby decorate the packaging structure.

In FIG. 7, a planar body 43 constituted of the fibrous structure is attached onto a body surface 41 of a plastic bottle container 40.

As the planar body, there is used an article obtained by processing the fibrous structure into nonwoven fabrics, textiles or the like, as described above.

As methods for sticking the planer body 43 constituted of the fibrous structure, there are, for example, a method in which during the molding of a plastic bottle container, a textile constituted of the fibrous structure is inserted into an inner wall of a mold and it is stuck onto the surface layer of the plastic bottle container by heat at the time of heat set, and a method in which during the molding of a preform by compression molding, a textile constituted of the fibrous structure is inserted into the inner wall of the mold and it is stuck onto the preform by compression pressure.

Since the plastic bottle container decorated by any method of the above first to fourth embodiments does not use any colorant such as a pigment or a dye based on chemical coloring, an amount of a chemical substance to be used can be decreased. Therefore, such a plastic bottle container has a less influence on the environment.

Moreover, in a case where there is used the fibrous structure made of the same resin as a resin which is a main material of the packaging structure or a resin having a high compatibility, decoloring can be easily effected by heating and kneading (re-pelletization) during recycling. Therefore, the plastic bottle container is decorated when used as a container, but it becomes colorless and transparent after reprocessing, and hence, recycle properties of the plastic bottle container are very excellent.

In contrast to the chemical coloring, a vivid color tone having deep color and gloss can be obtained, which is effective for differentiation of products by a decoration effect.

It is to be noted that the molded plastic bottle container may be decorated as in the above embodiment, but the preform may be decorated with the fibrous structure, and then molded into the bottle container which is a final product.

Moreover, the method of the above embodiment can be applied to not only the plastic bottle container but also other packages.

### [Third invention: Packaging structure]

A packaging structure of the third invention is a package mainly made of a resin, and it is, for example, a bottle, a cup, a pouch, or a tray. This packaging structure contains a thermoplastic resin as a main material and a coloration material which gives coloring.

The packaging structure of the present invention is colored with a coloration material which is decolored or achromatized when it receives external stimulation. Therefore, the packaging structure maintains the coloration during distribution/use thereof, but it can be decolored or achromatized after the use by the external stimulation.

In this specification, the "achromatizism" means a state that a chroma difference (a²+b²) ^{1/2} based on comparison with an achromatic origin is in a range of 5 or less when a standard white board (X78.42, Y81.00, Z92.32) is placed on the back of a sheet having a thickness of 0.3 mm and a Hunter Lab of the sheet is then measured by a reflection method. Here, the "achromatizism" includes all states having no color from white, black and gray to colorless and transparent.

In a case where the packaging structure can be achromatized by the external stimulation, the packaging structure can be in a state colored with a chromatic color which imparts a strong image to the feeling and mentality of a human during the distribution/use of the packaging structure. In the stage of remanufacture process after the use of the packaging structure, the packaging structure can be in an achromatic state which does not impart the strong image and is hardly visible. Accordingly, the coloration of reproduced products with an unnecessary chromatic color can be restrained. Furthermore, in this case, an L value of the sheet molded using a resin obtained by the reproduction of the packaging structure is preferably 50 or more. In consequence, even when the packaging structure is remanufactured together with usual colorless packaging structures, a blackish color is restrained, so that a color tone does not largely change and hence, higher recycle properties can be obtained.

As a resin which is a main material constituting the coloration material, for example, a thermoplastic polyester can be used. As the thermoplastic polyester, there can be used an aliphatic, an alicyclic or an aromatic polyester derived from a dicarboxylic component and a diol component, or a copolymer or a blend thereof. Examples of the dicarboxylic component include aromatic dicarboxylic acids such as terephthalic acid, isophthalic acid and naphthalenedicarboxylic acid; aliphatic carboxylic acids such as succinic acid, adipic acid and sebacic acid; and alicyclic dicarboxylic acids such as cyclohexanedicarboxylic acid. Examples of the diol component include aliphatic glycols such as ethylene glycol, diethylene glycol and butanediol; alicyclic glycols such as cyclohexanedimethanol (CHDM); and aromatic diols such as bisphenols. In addition, polybasic carboxylic acid components and polyhydric alcohol components having a trivalent or a higher valent functional group can also be used. Typical examples of the resin which can be suitably used include polyethylene terephthalate (PET), polybutylene terephthalate (PBT), polyethylene naphthalate (PEN), polycarbonates, polyarylates, isophthalic acid-copolymerized PET (PET-1), cyclohexanedimethanol (CHDM)-copolymerized PET, and polyesters copolymerized with a soft segment constituting a polyolefin or a polyether.

Of these resins, particularly preferable examples of the plastic resin which is the main material constituting the coloration material of the present invention include polyethylene terephthalate (PET), polybutylene terephthalate (PBT), polyethylene naphthalate (PEN), polycarbonates, polyarylates, isophthalic acid-copolymerized PET (PET-I), cyclohexanedimethanol (CHDM)-copolymerized PET, and polyesters copolymerized with a soft segment constituting a polyolefin or a polyether. In view of the fact that these resins belong to polyesters, if the polyester resin is selected as a resin which is laminated together with the coloration material, the recycle properties of the packaging structures can be enhanced.

Moreover, a thermoplastic polyamide can be used. As the thermoplastic polyamide, there can be used an aliphatic, an alicyclic or an aromatic polyamide derived from a dicarboxylic component and a diamine component, a polyamide derived from an aminocarboxylic acid or a lactam thereof, or a copolymer or a blend thereof. Examples of the dicarboxylic component include aliphatic carboxylic acids such as succinic acid, adipic acid, sebacic acid and decanedicarboxylic acid; and aromatic dicarboxylic acids such as terephthalic acid and isophthalic acid. Examples of the diamine component include linear and branched aliphatic diamines such as 1,6-diaminehexane, 1,8-diaminoocatane and 1,10-diaminodecane; alicyclic diamines such as bis(aminomethyl)cyclohexane and bis(4-aminocyclohexyl)methane; and aromatic diamines such as m-xylylenediamine and p-xylylenediamine. In addition, examples of the aminocarboxylic acid include aliphatic aminocarboxylic acids such as ω-aminocaproic acid, ω-aminooctanoic acid and ω-aminoundecanoic acid; and aromatic aliphatic aminocarboxylic acids such as p-aminomethylbenzoic acid an p-aminophenylacetic acid. More specifically, 6-nylon, 6,6-nylon, 11-nylon, 12-nylon, 6,10-nylon, 6,12-nylon, MXD6 (m-xylyleneadipamide) nylon and the like are suitably used.

Furthermore, an olefin resin can also be used. Examples thereof include polyethylenes (PE) such as low-density polyethylene (LDPE), medium-density polyethylene (MDPE), high-density polyethylene (HDPE), linear low-density polyethylene (LLDPE) and linear very low-density polyethylene (LVLDPE); polypropylene (PP), ethylene-propylene copolymers, polybutene-1, ethylene-butene-1 copolymers, propylene-butene-1 copolymers, ethylene-propylene-butene-1 copolymers, ethylene-vinyl acetate copolymers, ionically crosslinked olefin copolymers (ionomers) or blends thereof. In addition, there can be used polyacrylonitrile, polystyrene, polymethylpentene, polyvinyl alcohol, polymethyl methacrylate, cyclic olefinic copolymers (COC), and fluorinated polymers.

In the packaging structure of the present embodiment, a coloring component in which color change occurs by the external stimulation is used as a colorant.

With regard to the color change, two patterns can be considered: decoloring of the coloring component by the external stimulation, and a color change into another chromatic color.

The coloration showing a usual chromatic color occurs due to selective absorption of a light having a specific wavelength by a chemical structure present in a material. In the former case, the chemical structure of at least one coloring component constituting the coloration material is changed by the external stimulation to thereby lose absorption in a visible light region, so that the material can be completely decolored. In consequence, the packaging structure can be in a colored state during the distribution/use thereof, and in the stage of remanufacture after use, the packaging structure can be completely decolored, which leads to the improvement of recycle properties. In particular, this case is beneficial for the recycle of designated PET bottles in the second class.

In the latter case, the chemical structure of at least one coloring component constituting the coloration material is changed by the external stimulation to reduce selectivity of a light-absorbing wavelength in a visible light region, whereby achromatization can be made. For example, in the coloring component where a chromatic color A is changed to B by the external stimulation, a coloring component C which is a complimentary color of B can coexist. In consequence, a chromatic color is appeared owing to a mixed color of A and C before the application of the stimulation, but the achromatization can be made owing to a mixed color of B and C which are in relation to a complimentary color after the application of the stimulation. Therefore, the packaging structure can be in a state colored with a chromatic color which imparts a strong image to the feeling and mentality of a human during the distribution/use of the packaging structure. In the stage of remanufacture process after the use of the packaging structure, the packaging structure can be in an achromatic state which does not impart the strong image and is hardly visible. Accordingly, the coloration of reproduced products with an unnecessary chromatic color can be restrained. This method is effective for the recycle in use applications which do not require high transparency as in the case of the designated PET bottles in the second class.

Moreover, the external stimulation referred to here includes, for example, physical and chemical stimulations such as heat applied during the reproduction of the packaging structure, light, electricity, pressure, and an environmental change around the coloring component by various processes. However, a stimulation that the packaging structure receives during the distribution/use thereof is not included.

The heat which is the external stimulation includes, for example, heating for melt kneading during the reproduction of the packaging structure, and frictional heat in a crushing step.

As mentioned above, when heating for melt kneading during the reproduction is utilized, additional facilities for decoloring or achromatizing the packaging structure are not necessary, and conveniently, an energy efficiency for the reproduction is also improved.

As the coloring component in this case, there is used the coloring component in which color change does not occur by heat received during the manufacture, distribution and use of the packaging structure, for example, heat applied during the processing of the packaging structure, heat at the time of filling of contents, or heating, cooling or the like during the distribution.

As such a coloring component, for example, a thermochromic material can be used. The thermochromic material includes an irreversible type in which the color change occurs by a fluctuation of a temperature but any color change does not occur any more by a subsequent fluctuation, and an reversible type in which the color change repeatedly occurs by the fluctuations of the temperature. In the present invention, the use of the former is preferred. However, even the reversible type becomes usable by suitable setting of a color change temperature or by adjusting a developer. Typical coloring components include inorganic compounds such as metal salts and metal complex compounds. These coloring components include compounds in which chlorine, bromine, iodine, nitric acid, phosphoric acid, oxalic acid, ammonia, an amine, water or an ionized compound thereof is coordinated as a ligand to a metallic component of cobalt, nickel, iron, copper, molybdenum, aluminum or the like.

Moreover, the coloring component can be obtained by a combination of a leuco dyestuff and a developer. They develop a color owing to their interaction, and a color change temperature can be adjusted by selecting a combination of melting points of both the substances. Furthermore, the color change temperature can also be adjusted by adding a third component which affects the interaction. For example, when a resin is used as the third component, the color change temperature can be set to a desired value by selecting physical properties such as the melting point of the resin. As the leuco dyestuff, there can be mentioned triphenylmethane-based, fluorane-based, phenothiazine-based, indolylphthalide-based, spiropyran-based, rhodamine lactam-based, azaphthalide-based dyestuffs and the like. More specifically, there can be mentioned, as triphenylmethane-based dyestuffs, 3,3-bis-(p-dimethylaminophenyl)phthalide, 3,3-bis-(p-dimethylaminophenyl)-6-dimethylaminophthalide, 3,3-bis-(p-dimethylaminophenyl)-6-diethylaminophthalide, 3,3-bis-(p-dimethylaminophenyl)-6-methoxyphthalide, 4-hydroxy-4'-dimethyl-aminotriphenylmethane lactone, 4-4'-bishydroxy-3,3'-bisaminotriphenylmethane lactone and the like.

Furthermore, as the developer, an organic acidic substance, an inorganic solid acid or the like is used. The organic acidic substance includes phenols, organic acids and salts thereof. More specifically, there can be mentioned bisphenol A, 4,4'-isopropylidnediphenol, 4,4'-methylene-bis(2,6-di-tert-butylphenol), nonylphenol, dodecylphenol, α-naphthol, β-naphthol, methyl p-oxybenzoate, catechol, 1-oxy-2-naphthoic acid, salicylic acid, tannic acid, methyl gallate, propyl gallate, octyl gallate and the like. These phenols and organic acids can also be used in the form of salts.

Moreover, as the inorganic solid acid, acid clay, montmorillonite, silica, silica-alumina, zinc silicate and the like are used.

In addition, the coloring component whose color is faded by heating at a certain or more temperature can also be used.

Examples of the external stimulation of the light include the irradiation of any of UV, visible lights to infrared lights, and the like.

As the coloring component in this case, there is used the coloring component in which the color change does not occur by the light received during the distribution/use of the packaging structure. As such a coloring component, a photochromic material can be used. More specifically, organic dyestuffs such as spiropyrans, spirooxazines, fulgides, diarylethenes and azobenzenes can be mentioned. Some of the photochromic materials bring about a structural change by heat, and this stimulation can be used together. Moreover, as a usable irradiating light, the sunlight or an artificial light source can be used, and for controlling it, a UV absorbent, a colorant or the like may be mixed with the coloring component, or a light-adjusting layer containing the material can be additionally provided. Furthermore, a stabilizer or the like for stabilizing a structure formed with the color change can be added.

Examples of a method for changing the color of the coloring component by the external light include the following techniques.

The packaging structure mixed with the above coloring component is irradiated with a light such as a UV ray to change the structure of the coloring component, thereby developing a color. In this state, the distribution/use of the packaging structure is carried out. On the other hand, after the use of the packaging structure, the structure of the coloring component is changed again to give rise to the color change by heating in the melting step of the reproduction or by irradiation with a light having a wavelength different from that at the time of the coloration.

As the electric stimulation, there is the application of a voltage or the like. It is suitable to apply the voltage during the reproduction.

As the coloring component, there can be used substances whose color changes by electrochemical oxidation or reduction, e.g., electrochromic materials. More specifically, there can be mentioned inorganic substances such as tungsten oxide, iridium oxide and prussian blue, viologen compounds, phthalocyanine metal complexes, and the like. In addition, a stabilizer or the like for stabilizing the structure formed with the color change can be added.

As the pressure stimulation, there are pressure which is applied in the melt kneading step of the reproduction, strain stress which remains in a molded article during the formation of the molded article, and the like.

As the coloring component whose color changes by the pressure, for example, a piezochromic material can be used.

In addition, as the external stimulation, chemical stimulation can be used. Particularly, there can be used the coloring component whose color changes by change in a surrounding environment of the coloring component, e.g., change in a hydrogen ion concentration, change in a concentration of ligand of a colorant, change in a concentration of a developer, a polarity change induced by change in a surrounding resin, or the like.

There can be used a compound whose color changes by altering absorption characteristics of a light induced due to change in chemical structure of the colorant component by changing the hydrogen ion concentration.

For example, there can be used a compound wherein coloration is achieved by combination of a hydrogen ion in a state of a high hydrogen ion concentration, i.e., in a state of a low hydrogen ion exponent (pH) but the color changes due to elimination of the hydrogen ion in a state of high hydrogen ion exponent (pH), such as in a neutral region or in an alkaline state.

As such a coloring component, for example, a halochromic material (pH indicator) can be used. More specifically, there can be used pH indicators which are already known and used, such as thymol blue, methyl yellow, methyl orange, ethyl orange, methyl red, phenol red, cyanine, naphtholphtalein, cresol red, phenolphthalein and thymolphthalein. In addition, the aforementioned leuco dyestuffs can also be used.

As a typical method for using the above compounds, for example, in a multilayer packaging structure, an acid component is added to a layer containing the coloring component so that the vicinity of the coloring component may become an acidic atmosphere (low pH state), whereby the packaging structure can be colored. As the acid component, for example, an organic acidic substance, an inorganic solid acid or the like is used. As the organic acidic substance, there can be mentioned phenols, organic acids and salts thereof. More specifically, there can be mentioned bisphenol A, 4,4'-isopropylidnediphenol, 4,4'-methylene-bis(2,6-di-tertbutylphenol), nonylphenol, dodecylphenol, α-naphthol, β-naphthol, methyl p-oxybenzoate, catechol, 1-oxy-2-naphthoic acid, salicylic acid, tannic acid, methyl gallate, propyl gallate, octyl gallate and the like. These phenols or organic acids can also be used in the form of salts.

Moreover, as the inorganic solid acid, acid clay, montmorillonite, silica, silica-alumina, zinc silicate, and the like can be mentioned.

As in the above, since the vicinity of the coloring component is maintained under an acidic atmosphere during the distribution/use of the packaging structure, it can be in a colored state.

On the other hand, at the remanufacture process after use, it can be decolored or achromatized by the dilution step where it is mixed with the other layer of the packaging structure or the other packaging structure or the alkali washing step. Namely, the layer containing the coloring component is mixed with the other layer of the packaging structure or the other packaging structure in the dilution step and melt kneaded, whereby the hydrogen ion is diluted to decrease a hydrogen ion concentration in the vicinity of the coloring component. Decoloring or achromatizing the packaging structure is effected by change in structure of the coloring component induced by the above change. Moreover, in the alkali washing step, since treatment is conducted in an environment of pH 10 to 14, the coloring component is decolored or achromatized by the chemical stimulation.

In this connection, not the organic acid but an organic base can be used. For example, a coloring component can also be used, which is colored by making the vicinity of the coloring component a basic atmosphere (high pH state) with an amine-based organic base such as ethylenediamine, diethanolamine, triethylamine, or pyridine.

According to the same method as in the above, there can be used a coloring component whose color can be changed by changing a ligand concentration in the vicinity of the coloring component. Namely, a layer containing the coloring component is colored in a state that the ligand concentration is high, and after use, the ligand concentration is decreased in the dilution step and melt kneading step at the remanufacture process, whereby the layer can be decolored or achromatized.

As such a coloring component, there can be, for example, mentioned inorganic compounds such as metal salts and metal complex compounds. As these compounds, there can be used those wherein chlorine, bromine, iodine, nitric acid, phosphoric acid, oxalic acid, ammonia, amines, water, and ionized compounds thereof are coordinated as ligands to metallic components such as cobalt, nickel, iron, copper, molybdenum, and aluminum. Color change occurs when an equilibrium state is broken by the occurrence of change in the surrounding ligand concentration and a complex is again formed along with transition to a new equilibrium state.

Moreover, similarly, there can be used a coloring component whose color changes by changing a concentration of a developer.

As such a combination of the color component, a combination of a leuco dyestuff and a developer can be used. They develop color by their interaction and color change can also be controlled by adding a third component (decoloring material) which inhibits the interaction. As the leuco dyestuff, there can be mentioned triphenylmethane-based, fluorane-based, phenothiazine-based, indolylphthalide-based, spiropyran-based, rhodamine lactam-based, azaphthalide-based dyestuffs, and the like. More specifically, there can be mentioned as triphenylmethane-based dyestuffs, 3,3-bis-(p-dimethylaminophenyl)phthalide, 3,3-bis-(p-dimethylaminophenyl)-6-dimethylaminophthalide, 3,3-bis-(p-dimethylaminophenyl)-6-diethylaminophthalide, 3,3-bis-(p-dimethylaminophenyl)-6-methoxyphthalide, 4-hydroxy-4'-dimethyl-aminotriphenylmethane lactone, 4-4'-bishydroxy-3,3'-bisaminotriphenylmethane lactone, and the like.

Furthermore, as the developer, an organic acidic substance, an inorganic solid acid, or the like is mentioned. More specifically, bisphenol A, 4,4'-isopropylidnediphenol, 4,4'-methylene-bis(2,6-di-tertbutylphenol), nonylphenol, dodecylphenol, α-naphthol, β-naphthol, methyl p-oxybenzoate, catechol, 1-oxy-2-naphthoic acid, salicylic acid, tannic acid, methyl gallate, propyl gallate, octyl gallate, and the like. These phenols or organic acids can also be used in the form of salts.

Moreover, as the inorganic solid acid, acid clay, montmorillonite, silica, silica-alumina, zinc silicate, and the like are used.

Furthermore, there can be used a coloring component whose color changes by change in polarity (hydrogen bond-donating ability) by changing surrounding resin of the coloring component. For example, there can be used a coloring component wherein coloring component is colored when added to a resin layer of a gas barrier layer of the packaging structure and color change is effected by changing the resin in the vicinity of the coloring component by melt kneading with the other resin at the recycling.

As such a coloring component, a solvatochromic dyestuff can be used. A solvatochromic dyestuff has a structure containing an electron-acceptor group and an electron-donor group at both ends of a π-conjugated system constituted of two or more carbon atoms, respectively. Therefore, polarizability of the conjugated system is high and hence color change occurs by the influence of the environment, such as change in surrounding polarity. More specifically, organic dyestuffs such as betains, melocyanines, spiropyrans, and spirooxazines can be used.

In addition, a halochromic material (pH indicator) can be used. A halochromic material is generally known as a material whose color changes by desorption of a hydrogen ion but similar color change occurs by interaction with a hydrogen bond-donating group such as hydroxyl group which determines polarity of a substance. More specifically, the aforementioned pH indicators and leuco dyestuffs can be used. A pH indicator has an inherent acid dissociation constant (Ka) and the value determines a pH region of color change. In a case where change in polarity is used as environmental change in the vicinity of the coloring component, it is necessary to select a pH indicator having a suitable acid dissociation constant so that the polarity region before and after the change in polarity becomes the region of color change.

In the coloration wherein a conventional colorant such as a pigment or a dye is used, the coloration is only paled in accordance with the Lambert-Beer rule even when diluted in the dilution step. However, by using the above coloring component, the coloring component itself is changed to effect color change in the packaging structure of the present invention, it becomes possible to achieve decoloration at a high efficiency without following the above rule.

Into the coloring component, known resin additives such as a filler, a colorant, a heat-resistant stabilizer, a light-resistant stabilizer, an antioxidant, an antiaging agent, a light stabilizer, a UV absorber, an antistatic agent, a lubricant such as a metal soap or wax, and a modifying resin or rubber can be mixed according to formulation known per se. For example, by mixing a lubricant, it is possible to reduce a load to the coloring component induced by shearing at melt processing and improve inroad of a resin into the screw of an extruder.

The packaging structure may have a single-layer structure containing the above resin as a base material or may have a multilayer structure containing two or more layers. Since a surrounding environment of the coloring component of the packaging structure can be easily changed in the remanufacture during the distribution/use of the packaging structure and after use, it is preferred to be a laminate structure constituted of a layer containing the coloring component and the other layer(s). This is because use of the laminate structure constituted of a layer containing the coloring component and the other layer(s) causes environmental change in the vicinity of the coloring component through dilution of the coloring component with the other layer(s) induced by melt kneading in the remanufacture process, the environmental change being able to utilize as external stimulation.

The resin layer other than the coloration material layer constituting the packaging structure can be suitably selected from thermoplastic resins and thermosetting resins depending on the uses and required functions.

As the resins to be selected in this case, there can be, for example, mentioned olefin resins, thermoplastic polyester resins, and the like.

Examples of the olefin resins include low-density polyethylene (LDPE), medium-density polyethylene (MDPE), high-density polyethylene (HDPE), linear low-density polyethylene (LLDPE), linear very low-density polyethylene (LVLDPE), polypropylene (PP), ethylene-propylene copolymers, polybutene-1, ethylene-butene-1 copolymers, propylene-butene-1 copolymers, ethylene-propylene-butene-1 copolymers, ethylene-vinyl acetate copolymers, ionically crosslinked olefin copolymers (ionomers), and blends thereof.

Moreover, examples of the thermoplastic polyester resins include polyethylene terephthalate (PET), polybutylene terephthalate (PBT), polyethylene naphthalate (PEN), polycarbonates, polyarylates, isophthalic acid-copolymerized PET (PET-I), cyclohexanedimethanol (CHDM)-copolymerized PET, and polyesters copolymerized with a soft segment constituting a polyolefin or a polyether.

However, the resin layer other than the coloration layer constituting the packaging structure is, in particular, preferably a layer made of a polyester resin. When the resin layer other than the coloration layer is a layer constituted of a polyester layer, the recycle properties of the packaging structure can be enhanced by using a polyester-based resin as the main material of the coloration material.

Furthermore, the packaging structure may contain various layers in order to impart required function(s). For example, the packaging structure may have a gas barrier layer. Examples of the barrier resins include ethylene-vinyl alcohol copolymers (EVOH), cyclic olefinic copolymers (COC), especially copolymers of ethylene with cyclic olefins (APEL manufactured by Mitsui Chemicals, Inc., etc.), and m-xylyleneadipamide (MXD6).

In addition, an adhesive resin can also be interposed between the respective resin layers, if necessary. As such an adhesive resin, there can be mentioned thermoplastic resins having carbonyl groups based on a carboxylic acid, a carboxylic anhydride, a carboxylate salt, a carbamide, a carboxylate ester in main chains or side chains. Suitable examples of the adhesive resin include one or a combination of two or more of ethylene-acrylic acid copolymers, ionically crosslinked olefin copolymers, maleic anhydride-grafted polyethylene, maleic anhydride-grafted polypropylene, acrylic acid-grafted polyolefins, ethylene-vinyl acetate copolymers, copolymerized polyesters, copolymerized polyamides, and the like. The coloration layer may possess both functions of coloration and barrier ability.

The packaging structure of the present invention can be manufactured by a known method except that the above coloring component is used.

For example, the processing of films, sheets, or tubes can be conducted by mixing a coloring component with a base resin by dry blend or melt blend, melt kneading them in an extruder, and subsequently extruding resins into a predetermined form through a T-die, a circular die (ring die), or the like to obtain T-die films, brown films, or the like. The T-die film is biaxially stretched to form a biaxially stretched film.

Moreover, a coloring component is mixed with a base resin and the whole is melt kneaded in an extruder and then extruded into a certain melt resin mass, which is subjected to compression molding to produce a container or a preform for manufacturing containers.

The molded article may be in a form of a pariosn for forming films, sheets, bottles or tubes or a preform for forming pipes, bottles, and tubes.

The bottle molding from a parison, pipe or preform can be easily conducted by pinching off the extruded product with one pair of split mold and blowing a fluid into the inside.

Moreover, after a pipe or preform is cooled, it is heated to stretch temperature and then stretched in the axial direction and simultaneously blow-stretched in the circumferential direction by fluid pressure, whereby stretched blow bottles can be molded.

Furthermore, by subjecting a film or a sheet to means such as vacuum forming, pneumatic forming, bulging, or plug-assist forming, packaging containers of cup-shape, tray-shape, or the like shape or capping members are obtained.

The packaging materials such as films can be used as various forms of packaging bags. The bag manufacture can be conducted by bag-manufacturing methods known per se and there can be mentioned usual three-sided or foursided seal pouches, pouches with gazette, standing pouches, pillow packaging bags, and the like

For manufacturing a multilayer extrusion molded article, co-extrusion molding or multilayer injection molding known per se can be utilized. For example, using extruders whose number corresponds to the kinds of resins, extrusion molding may be conducted in the same manner as in the above except that a multiple multilayer die is used.

Moreover, for manufacturing a multilayer injection molded article, by a simultaneous injection method or sequential injection method, a multilayer injection molded article can be manufactured using extruders whose number corresponds to the kinds of resins.

Furthermore, for manufacturing a multilayer compression molded article, using extruders whose number corresponds to the kinds of resins, a multilayer compression molded article can be manufactured by extruding the resins as a certain resin mass through a multiple multilayer die and subjecting it to compression molding with a mold.

In addition, for manufacturing a multilayer film or a multilayer sheet, a multilayer film or sheet can be obtained by an extrusion-coating method, a sandwich lamination method, or dry lamination of pre-processed films.

Moreover, the packaging structure of the present invention can be obtained by coating a packaging structure with a coating material containing a coloring component.

In the coating, lamination can be effected by preparing a coating material by dispersing a coloring component in a base material having curability using additives such as a solvent and a dispersant according to needs, applying the coating material on the other resin layer surface by a known method such as gravure coating, spray coating, or dip coating, and curing into a cured coated film by heat or a method of UV irradiation or the like.

For example, in a case where a coloring component which is colored by irradiation with a light is used in the packaging structure manufactured by the above method or that a coloring component which is colored by electric stimulation is used therein, coloring is conducted according to needs.

Since the packaging structure of the present invention manufactured by the above method uses a coloring component whose color changes by external stimulation, the structure can be easily decolored or converted into an achromatic color by applying a specific external stimulation at the remanufacture process after use.

When the reproduced resin obtained by remanufacture at this time is molded into a sheet having a thickness of 0.3 mm and Hunter Lab of the sheet is measured with placing a standard white board (X78.42, Y81.00, Z92.32) on the back of the sheet by the reflection method, a chroma difference (a²+b²)^{1/2} from an achromatic origin is preferably 5 or less. When the chroma difference of the reproduced resin is 5 or less, it is evaluated as achromatic in appearance and the coloration of reproduced products with unnecessary chromatic color can be restrained.

### [Fourth invention: Reproduction method]

A method of reproduction of the present invention comprises collecting the packaging structure and melting it to effect reproduction, wherein the melting for the reproduction is conducted at a temperature equal to or higher than the temperature at which the coloring component contained in the packaging structure is decolored.

The melting can be conducted, for example, using a melt-extruder or the like.

In the reproduction process, steps necessary for manufacturing reproduced products, such as washing and separation are included in addition to the melting.

The melting for the reproduction is conducted at a temperature equal to or higher than the temperature at which the coloring component contained in the packaging structure is decolored.

For example, in a case where the temperature at which the coloring component is decolored is 220°C, the melting temperature is set to a temperature equal to or higher than 220°C (e.g., 250°C). More specifically, for example in a case where the melting of a resin is conducted in a melt-extruder, the set temperature of a flow path through which the resin is carried in a melted state is set to 250°C or the like.

By conducting the melting at such a temperature, the packaging structure is decolored due to destruction of the regular configuration of the coloring component contained. Thereby, even when the packaging structure collected has been colored, the color can be removed at the melting stage.

Namely, the packaging structure of the present invention can possess functions of a visible light barrier and a decoration by coloration in the production process. On the other hand, in the collection/remanufacture process, the packaging structure can satisfy the reuse suitability evaluation through decoloring and thus becomes recyclable. Therefore, a reuse ratio of the containers and the like molded with the packaging structure is enhanced and hence recycling can be promoted.

### [Measurement of decoloring temperature of coloring component]

Melting points of the constituting polymers were measured on, e.g., Morphotex (registered trademark) finely crushed product (crush length 150 µm) [made by Teijin Fibers Ltd.] having a multiple multilayer structure of two resins (polyethylene terephthalate (PET) and nylon (Ny-6)) different in refractive index by differential scanning calorimetry and were found to be 220°C and 250°C. Moreover, when the material was heated at 10°C/min with observing appearance through an optical microscope on a hot stage, it was decolored at 220°C.

From these results, the decoloring temperature of Morphotex was 220°C, which corresponds to the melting point of Ny-6 as a constituting polymer.

Moreover, as another embodiment of the reproduction method, there is a method of reproduction of the above packaging structure, wherein the packaging structure is decolored or achromatized by applying external stimulation in at least one step of a melting step, a dilution step and an alkali-washing step at reproduction of the packaging structure.

In these steps, external stimulation is applied to the packaging structure to decolor or achromatize the packaging structure, whereby a restriction on color tone for the remanufacture of the colored molded articles is relieved and hence productivity can be enhanced.

Moreover, by decoloring induced by stimulation in the dilution step, the alkali washing step, and the melt kneading step for the reproduction, the colored packaging structure can be remanufactured without new facilities.

### [Examples]

### [Resin composition]

### Example 1

Metallocene PE (KS560T) [Japan Polychem Corporation] (99.5 wt%) as a matrix resin was mixed with 0.5 wt% (dry blend) of a finely crushed product (crush length 150 µm) of Morphotex (registered trademark) [made by Teijin Fibers Ltd.] as a colorant component, followed by pre-kneading in a stirring drying machine [made by Dalton Co., Ltd.]. Afterward, an injection molding machine (NN75S) [made by Niigata Ironwork Co., Ltd.] was used at a plasticizing temperature of 200°C to prepare a sheet having a thickness of 1.5 mm. At this time, the molded sheet was colored. The thus prepared sheet was enlargedly observed through an optical microscope, so that it was confirmed that Morphotex was not destroyed.

### Comparative Example 1

The same procedure as in Example 1 was carried out except that the plasticizing temperature of the injection molding machine was 270°C, to prepare a sheet having a thickness of 1.5 mm. At this time, the molded sheet was decolored. The thus prepared sheet was enlargedly observed through an optical microscope, so that it was found that Morphotex was destroyed and its presence could not be confirmed.

### [Packaging structure]

### Example 2

95 wt% of Metallocene PE as a matrix resin was mixed with 5 wt% of a finely crushed product of Morphotex to prepare masterbatch pellets, and the thus prepared pellets were then processed using a twin screw extruder equipped with a powder-feeding device, a cooling conveyer and a pelletizer.

Afterward, in a co-injection molding machine, polyethylene terephthalate (RT543CTHP) [Japan Unipet Co., Ltd.] was fed to injection machines for an inner layer and an outer layer (set temperature 280°C). The previously processed masterbatch pellets were fed to an injection machine for an intermediate layer and then co-injection molded into an injection mold to obtain a two-kind three-layer preform (32 g) containing the inner and outer layers of polyethylene terephthalate and the intermediate layer containing 25 wt% of a colorant layer. Afterward, this preform was subjected to biaxial stretch blowing to mold a two-kind three-layer multilayer bottle having a content of 500 ml.

In the co-injection molding, a set temperature of the injection machine for the intermediate layer and a temperature of a hot runner for the intermediate layer were set to 200°C which was lower than a decoloring temperature of Morphotex (220°C). As a result, the multilayer bottle obtained by the biaxial stretch blowing was colored.

### Comparative Example 2

The same procedure as in Example 2 was carried out except that the set temperature of the injection machine for the intermediate layer and the temperature of the hot runner for the intermediate layer in the co-extrusion molding were set to 270°C which was higher than the decoloring temperature of Morphotex (220°C), to form a two-kind three-layer multilayer bottle. At this time, the multilayer bottle obtained by the biaxial stretch blowing was not colored.

### Example 3

95 wt% of CHDM copolymerized PET (IV = 0.65) as a matrix resin was mixed with 5 wt% of a finely crushed product of Morphotex to prepare masterbatch pellets, and the thus prepared masterbatch pellets were then processed using a twin screw extruder equipped with a powder-feeding device, a cooling conveyer and a pelletizer.

Afterward, in a co-injection molding machine, polyethylene terephthalate (RT543CTHP) [Japan Unipet Co., Ltd.] was fed to injection machines for an inner layer and an outer layer (set temperature 280°C). The previously processed masterbatch pellets were fed to an injection machine for an intermediate layer and then co-injection molded into an injection mold to obtain a two-kind three-layer preform (32 g) containing the inner and outer layers of polyethylene terephthalate and the intermediate layer containing 25 wt% of a colorant layer. Afterward, this preform was subjected to biaxial stretch blowing to mold a two-kind three-layer multilayer bottle having a content of 500 ml.

In the co-injection molding, a set temperature of the injection machine for the intermediate layer and a temperature of a hot runner for the intermediate layer were set to 200°C which was lower than a decoloring temperature of Morphotex (220°C). As a result, the multilayer bottle obtained by the biaxial stretch blowing was colored.

### Comparative Example 3

The same procedure as in Example 3 was carried out except that the set temperature of the injection machine for the intermediate layer and the temperature of the hot runner for the intermediate layer in the co-injection molding were set to 270°C which was higher than the decoloring temperature of Morphotex (220°C), to mold a two-kind three-layer multilayer bottle. At this time, the multilayer bottle obtained by the biaxial stretch blowing was not colored.

### Example 4

### [Preparation of coloration material pellets]

Crystal violet lactone [made by Kishida Chemical Co., Ltd.] (0.2 wt%) as a leuco dyestuff and propyl gallate [made by Kishida Chemical Co., Ltd.] (0.1 wt%) as a developer were allowed to adhere to pellets of Metallocene PE (KS560T) [made by Japan Polychem Corporation] (99.7 wt%) by dry blending, to prepare coloration material pellets.

### [Preparation of decoloration material pellets]

Methyl cholate [made by Kishida Chemical Co., Ltd.] (0.1 wt%) as a decoloring component was allowed to adhere to pellets of Metallocene PE (KS560T) [made by Japan Polychem Corporation] (99.9 wt%) by dry blending, to prepare decoloration material pellets.

### [processing of multilayer sheet]

The coloration material pellets and the decoloration material pellets were fed to two extruders each equipped with a two-layer T-die (Laboplasto mill) [made by Toyo Seiki Co., Ltd.], respectively, to mold a two-layer sheet having a total thickness of 0.3 mm (coloration material layer/decoloration material layer = 0.15 mm/0.15 mm). All set temperatures of a plasticizing device, paths and the die were 150°C. The molded sheet was colored dark blue (Sample 1-a). Afterward, a color tone of the obtained sheet was measured.

For the decoloration of this sheet, the sheet was cut into a size of 5 x 5 mm and then fed to a material hopper of an injection molding machine (NN75S) [made by Niigata Ironwork Co., Ltd.], and a plasticizing temperature was set to 150°C to prepare a sheet having a thickness of 1.5 mm. At this time, the molded sheet was substantially colorless and transparent (Sample 1-b). Afterward, the obtained sheet was regulated so as to be a thickness of 0.3 mm by thermal compression at 120°C, and then a color tone was measured.

The color tone of the sheet was measured by placing a standard white board (X78.42, Y81.00, Z92.32) on the back of the sheet having a thickness of 0.3 mm, and then measuring a Hunter Lab of the sheet by a reflection method in a color computer (SM-4) [Suga Test Instruments Co., Ltd.].

### Comparative Example 4

The same procedure as in Example 4 was carried out except that instead of the decoloration material pellets, PE virgin pellets were fed to the extruder equipped with a two-layer T-die to mold a sheet having a total thickness of 0.3 mm (coloration material layer/decoloration material layer = 0.15 mm/0.15 mm).
The molded sheet was colored dark blue (Sample 1'-a).

For the decoloration of this sheet, the sheet was cut into a size of 5 x 5 mm and then fed to a material hopper of an injection molding machine (NN75S) [made by Niigata Ironwork Co., Ltd.], and a plasticizing temperature was set to 150°C to prepare a sheet having a thickness of 1.5 mm. At this time, the molded sheet was colored blue (Sample 1'-b). Afterward, the obtained sheet was regulated so as to be a thickness of 0.3 mm by thermal compression at 120°C, and then a color tone was measured.

### Example 5

A copolymerized polyester (Vylon GM990) [made by Toyobo Co., Ltd.] (97.99 wt%) was mixed with potassium cobalt phosphate [made by Terada Chemishe Fabrik] (2 wt%) which was a heat-fading pigment and a yellow pigment (GRAPHTOL YELLOW H2R) [made by Clariant Japan] (0.01 wt%) as coloring components to prepare masterbatch pellets, and the thus prepared pellets were then processed using a twin screw extruder equipped with a powder-feeding device, a cooling conveyer and a pelletizer.

Afterward, in a co-injection molding machine, polyethylene terephthalate (RT543CTHP) [Japan Unipet Co., Ltd.] was fed to injection machines for an inner layer and an outer layer (set temperature 280°C). The previously processed masterbatch pellets were fed to an injection machine for an intermediate layer (set temperature 150°C) and then co-injection molded into an injection mold to obtain a two-kind three-layer preform (32 g) containing the inner and outer layers of polyethylene terephthalate and the intermediate layer containing 25 wt% of a colorant layer. Afterward, this preform was subjected to biaxial stretch blowing to mold a two-kind three-layer multilayer bottle having a content of 500 ml. The molded bottle was colored orange which was a chromatic color (Sample 2-a). A color tone of a body portion (thickness 0.3 mm) of the obtained bottle was measured.

For the decoloration of this bottle, the bottle was crushed into flakes in a crusher (VC3-360) [made by Horai Co., Ltd.], and the flakes were fed to an extruder equipped with a T-die (Laboplasto mill) [made by Toyo Seiki Co., Ltd.] to mold a sheet having a total thickness of 0.3 mm. All set temperatures of a plasticizing device, paths and the die were 280°C. The molded sheet showed gray which was an achromatic color (Sample 2-b). Moreover, a color tone of the resulting sheet was measured.

### Comparative Example 5

The same procedure as in Example 5 was carried out except that potassium cobalt phosphate was removed, to mold a two-kind three-layer multilayer bottle having a content of 500 ml. The molded bottle was colored yellow which was a chromatic color (Sample 2'-a). A color tone of a body portion (thickness 0.3 mm) of the obtained bottle was measured.

Similarly, for the decoloration of this bottle, the bottle was crushed into flakes in a crusher (VC3-360) [made by Horai Co., Ltd.], and the flakes were then fed to an extruder equipped with a T-die (Laboplasto mill) [made by Toyo Seiki Co., Ltd.] to mold a sheet having a total thickness of 0.3 mm. All set temperatures of a plasticizing device, paths and the die were 280°C. The molded sheet showed yellow which was a chromatic color (Sample 2'-b). Moreover, a color tone of the obtained sheet was measured.

The results of the above measurements are shown in Table 1.

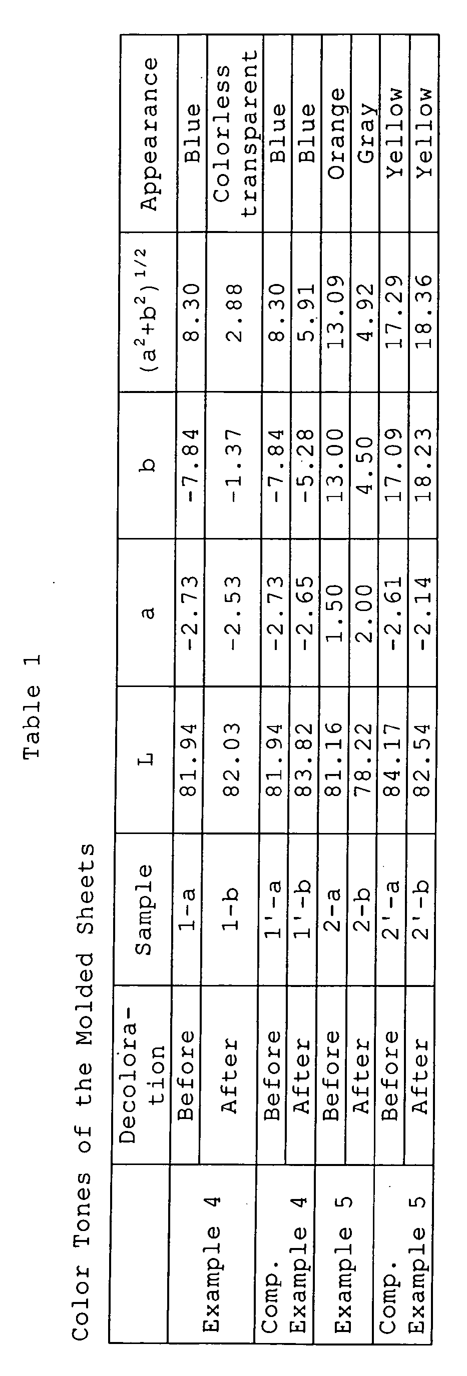

### Industrial Applicability

According to the present invention, a coloring component constituted of a polymer and having a regular configuration as a coloring principle is contained in a matrix resin, and therefore, a resin composition (packaging structure) can be colored by its physical coloring mechanism.

Furthermore, since a temperature at which the coloring component is decolored is higher than a processing temperature of the matrix resin, the resin composition (packaging structure) can be colored by setting a set temperature for injection molding at the processing temperature of the matrix resin. Moreover, the resin composition (packaging structure) can be decolored by setting a set temperature of melt extrusion to a temperature higher than a temperature at which the coloring component is decolored.

Therefore, the resin composition (packaging structure) can be colored by injection molding in'a manufacture process in a flow of manufacture/recycling, and the resin composition (packaging structure) can be decolored by melt extrusion in a collection/remanufacture process.

Consequently, in a distribution process, functions of a visible light barrier and a decoration by coloration of the resin composition (packaging structure) can be exerted, and it is decolored in the collection/remanufacture process, whereby the recycle of the packaging structure is possible.

Accordingly, a reuse ratio of containers (e.g., PET bottles) molded from the resin composition (packaging structure) can be enhanced, which can promote the recycle of the packaging structure.

Moreover, according to the present invention, a packaging structure and a decoration method thereof can be provided in which the decoration can be achieved by a physical coloring mechanism, and even when decorated, the recycle of the packaging structure is easy.

Furthermore, according to the present invention, a packaging structure can be provided in which when a package is colored by use of a coloring component whose configuration changes by external stimulation to bring about color change, the packaging structure is colored during the distribution/use, but after use, the packaging structure can be easily decolored or achromatized by the external stimulation in a processing step or the like during the recycle.

## Claims

1. A resin composition wherein
a coloring component comprising a polymer and having a regular configuration as a coloring principle is contained in a matrix resin, and
a temperature at which the coloring component is decolored is higher than a processing temperature of the matrix resin.

2. The resin composition according to claim 1, wherein when the coloring component comprises a plurality of polymers,
a melting point corresponding to the temperature at which one of the plurality of polymers is decolored is higher than the processing temperature of the matrix resin.

3. The resin composition according to claim 1, wherein the coloring component is a multilayer laminate of two or more resins whose refractive indices are different from each other.

4. A packaging structure using the resin composition according to any one of claims 1 to 3.

5. The packaging structure according to claim 4, which has one or more layers comprising the resin composition and one or more layers comprising a polyester.

6. The packaging structure according to claim 4, wherein the matrix resin constituting the resin composition is a polyester.

7. The packaging structure according to claim 4, wherein at least one polymer of the one or more polymers constituting the coloring component is a polyester.

8. The packaging structure according to claim 4, wherein the resin composition is laminated by co-extrusion.

9. The packaging structure according to claim 4, wherein the resin composition is laminated by coating.

10. A packaging structure wherein, on at least a portion of the surface of the packaging structure, portions which are different in optical characteristics from the surface are periodically arranged by use of a fibrous structure.

11. The packaging structure according to claim 10, wherein the portions which are different in optical characteristics are portions different in refractive index from the surface of the packaging structure.

12. The packaging structure according to claim 10, wherein the portions which are different in optical characteristics are voids formed inside the fibrous structure.

13. A method for decorating a packaging structure, wherein the decoration is conducted by forming a configuration in which on at least a portion of the surface of the packaging structure, portions which are different in optical characteristics from the surface are periodically arranged by use of a fibrous structure.

14. The method for decorating the packaging structure according to claim 13, wherein the decoration is conducted by winding the fibrous structure around a surface layer of the packaging structure.

15. The method for decorating the packaging structure according to claim 13, wherein the decoration is conducted by mixing the fibrous structure with a resin which forms the packaging structure.

16. The method for decorating the packaging structure according to claim 13, wherein the packaging structure is decorated with a planar body formed by processing the fibrous structure.

17. A method for reproducing a packaging structure, which comprises collecting the packaging structure according to claim 4, melting and reproducing it, wherein
the melting for the reproduction is conducted at a temperature equal to or higher than a temperature at which a coloring component contained in the packaging structure is decolored.

18. A method for reproducing a packaging structure, which comprises collecting the packaging structure according to any one of claims 5 to 12, melting and reproducing it, wherein
the melting for the reproduction is conducted at a temperature equal to or higher than a temperature at which a coloring component contained in the packaging structure is decolored.

19. A packaging structure which contains a coloration material comprising one or more coloring components and which is decolored or achromatized by external stimulation after use.

20. The packaging structure according to claim 19, wherein a coloring mechanism of the coloration material is due to light absorption in a visual light region.

21. The packaging structure according to claim 19, wherein the packaging structure is a laminated structure having a layer containing the coloration material.

22. The packaging structure according to claim 19, which has one or more layers comprising the coloration material and one or more layers comprising a thermoplastic resin.

23. The packaging structure according to claim 19, wherein the coloration material contains a resin as a main material.

24. The packaging structure according to claim 19, wherein a main material resin of a layer comprising the coloration material is the same kind of resin as a thermoplastic resin constituting at least one layer of other layers comprising a thermoplastic resin.

25. The packaging structure according to claim 19, which is decolored or achromatized by changing a chemical structure of at least one component constituting the coloration material by external stimulation.

26. The packaging structure according to claim 19, wherein the external stimulation is stimulation by heat or a light.

27. The packaging structure according to claim 19, wherein the external stimulation is change in a surrounding environment of the coloring component.

28. The packaging structure according to claim 27, wherein the change in a surrounding environment is change in a hydrogen ion concentration, change in a polarity, change in a ligand concentration, change in a developer concentration, or change in a surrounding resin.

29. The packaging structure according to claim 19, wherein a chroma difference (a²+b²) ^{1/2} between a sheet molded using a resin obtained by reproducing the packaging structure and an achromatic origin is 5 or less.

30. A method for reproducing the packaging structure according to any one of claims 19 to 29, wherein
the packaging structure is decolored or achromatized by applying external stimulation thereto in at least one step of a melting step, a dilution step and an alkali-washing step during reproduction of the packaging structure.
